# EUROPÄISCHE PATENTSCHRIFT

(11) **EP 3 294 523 B1**
(45) Veröffentlichungstag und Bekanntmachung des Hinweises auf die Patenterteilung: **15.11.2023**
(21) Anmeldenummer: 16813243.9
(22) Anmeldetag: 19.12.2016
(51) Int. Cl.: B29C 49/48, B29C 49/36, B29C 49/06, B29C 49/42, B29C 49/28

(54) **WECHSEL VON BLASFORMEN BEI BLASFORMMASCHINEN**
CHANGING BLOW MOULDS IN BLOW MOULDING MACHINES
REMPLACEMENT DE MOULES DE SOUFFLAGE SUR DES MACHINES DE MOULAGE PAR SOUFFLAGE

(30) Priorität: 18.12.2015 DE 102015122290
(43) Veröffentlichungstag der Anmeldung: 21.03.2018
(73) Patentinhaber: KRONES AG, 93073 Neutraubling (DE)
(72) Erfinder: GELTINGER, Florian, 93073 Neutraubling (DE)
(74) Vertreter: Hannke Bittner & Partner mbB Regensburg
(86) Internationale Anmeldenummer: PCT/EP2016/081813
(87) Internationale Veröffentlichungsnummer: WO 2017/103287

(56) Entgegenhaltungen:
- EP-A1- 2 918 391
- DE-A1-102009 015 522
- DE-U1-202011 109 959
- US-A1- 2015 145 178
- US-A1- 2015 151 455

## Beschreibung

Die vorliegende Erfindung betrifft ein Verfahren zum Betreiben einer Umformungsvorrichtung und insbesondere einen Wechsel von Blasformen dieser Umformungseinrichtung zum Umformen von Kunststoffvorformlingen zu Kunststoffbehältnissen. Daneben betrifft die Erfindung auch eine entsprechende Vorrichtung zum Umformen von Kunststoffvorformlingen zu Kunststoffbehältnissen.

Derartige Vorrichtungen sind aus dem Stand der Technik seit langem bekannt. Dabei werden erwärmte Kunststoffvorformlinge üblicherweise durch Beaufschlagung mit Luftdruck zu Kunststoffbehältnissen, wie Kunststoffflaschen umgeformt. Zu diesem Zweck ist üblicherweise an einem drehbaren Träger eine Vielzahl von Umformungsstationen bzw. Blasstationen angeordnet. Diese Blasstationen weisen dabei jeweils Blasformen auf, die wiederum einen Hohlraum aufweisen, innerhalb dessen die Kunststoffvorformlinge zu den Kunststoffbehältnissen umgeformt werden. Diese Blasformen weisen dabei ein Negativ des herzustellenden Behältnisses auf. Falls die Vorrichtung auf andere Behältnisse umgestellt werden soll, müssen die einzelnen Blasformen ausgewechselt werden. Im Stand der Technik werden diese Blasformen einzeln von den jeweiligen Umformungsstationen entnommen. Ein Bediener nimmt dabei die einzelnen Blasformeinrichtungen heraus und ersetzt sie durch neue Blasformeinrichtungen, welche die entsprechenden neuen Behältnisse formen sollen. Daher dauert der Wechselvorgang relativ lange und es ist auch ein Bediener notwendig.

Die Druckschrift US 2015/151455 A1 beschreibt eine Anlage (10) zur Herstellung von Behältern (12) aus thermoplastischen Vorformlingen (16), wobei die Anlage (10) mindestens umfasst: -eine erste Einheit (12) zur thermischen Konditionierung der Vorformlinge (16), die eine erste vertikale Seitenfläche (F1) aufweist; und- eine zweite Einheit (14) zur Formgebung der Behälter (24) ausgehend von den Vorformlingen (16), die in der ersten Einheit (12) thermisch konditioniert wurden, wobei die zweite Einheit eine zweite vertikale Seitenfläche (F2) aufweist; dadurch gekennzeichnet, dass die Anlage (10) mindestens einen Roboter (50) umfasst, der der ersten vertikalen Seitenfläche (F1) und der zweiten vertikalen Seitenfläche (F2) gegenübersteht, um selektiv durch die erste vertikale Seitenfläche (F1) und/oder durch die zweite vertikale Seitenfläche (F2) hindurch zu arbeiten, um Operationen an der ersten Einheit (12) und/oder der zweiten Einheit (14) auszuführen.

Die Druckschrift US 2015/145178 A1 beschreibt ein System zur Umformung von Kunststoffvorformlingen zu Kunststoffbehältern mit einer Transporteinrichtung, die die Kunststoffvorformlinge entlang eines vorgegebenen Transportweges transportiert, dadurch gekennzeichnet, daß die Transporteinrichtung einen beweglichen Stationsträger aufweist, der zumindest mittelbar auf einem ortsfesten Grundträger angeordnet ist, auf dem eine Mehrzahl von Umformstationen angeordnet ist. Die Umformstationen weisen jeweils Blasformeinrichtungen auf, die jeweils Hohlräume bilden, in denen die Kunststoffvorformlinge zu den Kunststoffbehältern umgeformt werden können, und diese Blasformeinrichtungen sind jeweils auf Blasformträgern angeordnet. Die Anlage weist eine Wechselvorrichtung auf, die geeignet und bestimmt ist, um in einem Wechselmodus der Anlage zumindest die Blasformvorrichtungen von ihren Blasformträgern zu entfernen und/oder Blasformvorrichtungen auf den Blasformträgern anzuordnen, und wobei diese Wechselvorrichtung während eines weiteren, vom Wechselmodus abweichenden Betriebsmodus geeignet und bestimmt ist, einen Behandlungsvorgang an zumindest einem für die Anlage vorgesehenen Arbeitselement durchzuführen.

Die Druckschrift EP 2 918 391 A1 beschreibt eine Anlage (100) Umformen von Kunststoffvorformlingen zu Kunststoffbehältnissen, mit einer Erwärmungseinrichtung (50) zum Erwärmen der Kunststoffvorformlinge (10), mit einer Vorrichtung (1) zum Umformen der Kunststoffvorformlinge (10) zu den Kunststoffbehältnissen, welche in der Transportrichtung der Kunststoffvorformlinge (10) nach der Erwärmungseinrichtung (50) angeordnet ist, wobei die Vorrichtung (1) eine Transporteinrichtung (2) aufweist, welche die Kunststoffvorformlinge (10) entlang eines vorgegebenen Transportpfads transportiert, und wobei die Transporteinrichtung (2) einen Stationsträger (12) aufweist, an dem eine Vielzahl von Umformungsstationen (8) angeordnet ist, wobei diese Umformungsstationen (8) jeweils Blasformeinrichtungen (14) aufweisen, und diese Blasformeinrichtungen (14) jeweils an Blasformträgern (16) angeordnet sind. Erfindungsgemäß weist die Vorrichtung (1) eine Wechseleinrichtung (40) auf, welche geeignet und dazu bestimmt ist, zumindest die Blasformeinrichtungen (14) von deren Blasformträgern (16) zu entfernen und/oder Blasformeinrichtungen an den Blasformträgern (16) anzuordnen, wobei diese Wechseleinrichtung (40) weiterhin geeignet und dazu bestimmt ist, wenigstens ein wechselbares Element (96, 98) der Erwärmungseinrichtung von der Erwärmungseinrichtung zu entfernen und/oder das wechselbare Element an dieser Erwärmungseinrichtung (40) anzuordnen.

Die Druckschrift DE 10 2009 015522 A1 beschreibt die Vorrichtung (1), die über eine Blasform (3) verfügt, in der ein Kunststoffvorformling mit Hilfe eines gasförmigen Mediums zu Kunststoffbehältern expandiert wird. Zum Strecken des Kunststoffvorformlings entlang einer Längsrichtung ist eine Streckleiste vorgesehen. Die Blasform weist einen Informationsträger, z.B. einen Radiofrequenz-Identifikationschip, und eine Informationsleseeinheit (7) zum Lesen des Informationsträgers auf. Der Informationsträger ist so gestaltet, dass durch das Zusammenspiel zwischen dem Informationsträger und der Informationsleseeinheit charakteristische Merkmale für geometrische Parameter der Behälter ermittelt werden. Bei den charakteristischen Merkmalen handelt es sich um das Behältervolumen, die Ausdehnung, das Umformverfahren, die Behältergeometrie, die Farbe der Kunststoffvorformlinge, den Durchmesser der Kunststoffvorformlinge, das Gewicht der Blasform, die Querschnittsfläche der Form und eine Betriebsstundenangabe. Ein unabhängiger Anspruch bezieht sich auch auf ein Verfahren zum Formen eines Kunststoffvorformlings zu einem Kunststoffbehälter.

In jüngerer Zeit sind auch Wechseleinrichtungen bekannt geworden, welche ein teil- oder vollautomatisches Wechseln von Blasformen ermöglichen.

DE202011109959U offenbart ein solches Verfahren und eine entsprechende Vorrichtung. DE202011109959U entspricht den beiden Oberbegriffen der unabhängigen Ansprüchen 1 und 7.

Dabei werden beispielsweise über ein Magazin einzuwechselnde Blasformen zur Verfügung gestellt, und ein Roboter entnimmt eine bisherige Blasform und setzt dafür eine neue Blasform in die jeweilige Umformungsstation ein. So werden beispielsweise die einzuwechselnden Blasformen der Reihe nach aus dem Magazin entnommen. Damit erfolgt im Stand der Technik keine Prüfung der Blasformen. So kann es vorkommen, dass eine falsche Blasform eingesetzt wird oder auch Störungen auftreten, wenn der Bediener eine Wechselpalette nicht ordnungsgemäß bestückt hat und diese Blasformen daher falsch in einer entsprechenden Wechselpalette sitzen. Eine Prüfung erfolgt nach einem Produktionsstopp einer Blasmaschine. Diese Prüfzeiten addieren sich zu den Wechselzeiten, was eine längere Produktionsunterbrechung zur Folge hat.

Der vorliegenden Erfindung liegt daher die Aufgabe zugrunde, derartiges Wechseln von Blasformen der Blasformmaschinen sicherer zu gestalten. Daneben sollten auch Wechselzeiten für derartige Umstellungen verringert werden.

Diese Aufgaben werden erfindungsgemäß durch die Gegenstände der unabhängigen Patentansprüche 1 und 7 gelöst. Vorteilhafte Ausführungsformen und Weiterbildungen sind Gegenstand der Unteransprüche.

Bei einem erfindungsgemäßen Verfahren zum Betreiben einer Umformungseinrichtung zum Umformen von Kunststoffvorformlingen zu Kunststoffbehältnissen (und insbesondere Kunststoffflaschen) werden in einem Arbeitsbetrieb der Vorrichtung die Kunststoffvorformlinge mittels einer Vielzahl von Umformungsstationen entlang eines vorgegebenen Transportpfades transportiert und durch Beaufschlagung mit einem fließfähigen Medium zu den Kunststoffbehältnissen expandiert. Dabei werden zum Expandieren der Kunststoffvorformlinge Blasformeinrichtungen verwendet, in deren inneren die Kunststoffvorformlinge zu den Kunststoffbehältnissen expandiert werden. Weiterhin wird in einem Wechselbetrieb zumindest eine der Blasformeinrichtungen der Vorrichtung (und/oder den Umformungsstationen) entnommen und/oder eine der Blasformeinrichtungen an einem Blasformträger der Vorrichtung (insbesondere an einem Blasformträger einer der Umformungsstationen) angeordnet, wobei zum Wechseln der Blasformeinrichtungen eine Wechseleinrichtung verwendet wird, welche eine Greifeinrichtung zum Greifen der Blasformeinrichtung aufweist.

Erfindungsgemäß wird in einem Arbeitsbetrieb und/oder während der Produktion die Umformungseinrichtung in einem ersten Schutzbereich betrieben, der für einen Maschinenbediener (zumindest zeitweise und insbesondere während des Arbeitsbetriebs bzw. der Produktion) nicht betretbar und/oder nicht erreichbar ist (bzw. in den der Benutzer nicht gelangen kann) ist. Die Wechseleinrichtung wird wenigstens teilweise in einem zweiten Schutzbereich angeordnet, der während des Arbeitsbetriebs wenigstens zeitweise für einen Maschinenbediener betretbar ist, wobei zwischen dem ersten Schutzbereich und dem zweiten Schutzbereich eine Verbdingung herstellbar ist.

Aus Sicherheitsgründen ist vorgesehen, dass auch bei aus dem Stand der Technik bekannten Maschinen teilweise Schutzbereiche vorgesehen sind, beispielsweise Umwandungen, welche im Arbeitsbetrieb nicht betreten werden können, sodass Unfälle vermieden werden können. Um den Wechselvorgang zu beschleunigen, wird nunmehr vorgeschlagen, dass derjenige Schutzbereich, in dem die Umformungseinrichtung selbst angeordnet ist, im Arbeitsbetrieb der Umformungseinrichtung und/oder während der Produktion nicht zugänglich ist, derjenige Bereich in dem jedoch die Wechseleinrichtung angeordnet ist, zugänglich ist. Auf diese Weise können bereits während des Arbeitsbetriebs vorbereitende Vorgänge für einen Wechselvorgang durchgeführt werden. Unter einem Betreten der Schutzbereichs wird allgemein ein Hinein-gelangen in diesen Schutzbereich verstanden also etwa auch ein hineingreifen mit einer Hand oder aber eine Hineinbewegung mit dem Kopf, um etwa bestimmte Bereiche der Anlage sehen zu können. Insbesondere handelt es sich bei dem Betreten jedoch um Vorgänge, welche zu einer erhöhten Gefahr für den Benutzer führen können.

Erfindungsgemäss ist die Wechseleinrichtung, die insbesondere als Roboter ausgeführt ist, örtlich außerhalb eines Schutzbereichs der Maschine bzw. der Umformungseinrichtung selbst platziert. Bei dem Schutzbereich kann es sich beispielsweise um Wandungen handeln, welche die Maschine umgeben und welche während des Arbeitsbetriebs ein Betreten des Maschinenbereichs verhindern. Es wäre jedoch auch möglich, dass es sich um andere Einrichtungen handelt, welche verhindern, dass ein Maschinenbediener im laufenden Betrieb zu der Umformungseinrichtung gelangt. So können beispielsweise auch Lichtschrankensysteme vorgesehen sein, welche ein Betreten der Umformungseinrichtung im laufenden Betrieb verhindern und beispielsweise ein Abschalten derselben bewirken, falls ein Benutzer (bzw. ein Körperteil des Benutzers) eine Lichtschranke passiert. Auch bei dem zweiten Schutzbereich, der die Wechseleinrichtung umgibt, kann es sich beispielsweise um tatsächliche Wandungen handeln, oder auch um ein Lichtschrankensystem.

Unter einem Schutzbereich wird daher insbesondere ein örtlich begrenzter Bereich verstanden, der - insbesondere aus Sicherheitsgründen - zu bestimmten Zeiten, etwa während des Maschinenbetriebs abgeriegelt werden kann.

Damit ist vorteilhaft der Schutzbereich des gesamten Systems, d. h. des Systems aus Umformungseinrichtungen und Wechseleinrichtungen in wenigstens zwei Bereiche aufgeteilt. Der erste Schutzbereich ist wie oben erwähnt während der Herstellung der Behältnisse geschlossen. Der zweite Schutzbereich, nämlich derjenige der Wechseleinrichtungen, kann auch während der Behältnisproduktion betreten werden.

Erfindungsgemäß wird während eines Arbeitsbetriebs der Anlage in dem zweiten Schutzbereich eine Vorbereitung eines Wechselvorgangs durchgeführt. Unter einer Vorbereitung kann beispielsweise ein Zurverfügungstellen von einzuwechselnden Blasformeinheiten verstanden werden oder auch eine Erkennung von Blasformeinrichtungen. Bevorzugt grenzen die beiden Schutzbereiche unmittelbar aneinander.

Bevorzugt ist die Wechseleinrichtung wenigstens zeitweise während eines Arbeitsbetriebs der Vorrichtung (d.h. eines Betriebs, in welchem Kunststoffvorformlinge zu Kunststoffbehältnissen umgeformt werden) vollständig innerhalb des zweiten Schutzbereichs angeordnet. Bevorzugt ist etwa ein Hauptträger, an dem beispielsweise Greifarme angeordnet sind, innerhalb dieses zweiten Schutzbereichs angeordnet. Auf diese Weise können bestimmte Tätigkeiten, welche einen Blasformwechsel vorbereiten, wie etwa eine Identifikation von Blasformteilen auch im laufenden Betrieb der Vorrichtung durchgeführt werden.

Bei einem weiteren bevorzugten Verfahren wird zum Wechseln der Blasformeinrichtung eine Wechseleinrichtung verwendet, welche eine Greifeinrichtung zum Greifen der Blasformeinrichtung aufweist, wobei diese Greifeinrichtung in wenigstens zwei unterschiedliche Richtungen beweglich und/oder bezüglich wenigstens dreier Schwenkachsen schwenkbar ist.

Durch eine derartige Ausgestaltung kann, wie unten genauer erläutert, ein sehr präziser Wechselvorgang durchgeführt werden.

Bei einem weiteren bevorzugten Verfahren ist während eines Arbeitsbetriebs die Verbindung zwischen dem ersten Schutzbereich und dem zweiten Schutzbereich unterbrochen.

Wie oben erwähnt, kann es sich bei dem zweiten Schutzbereich ebenfalls wieder um eine tatsächliche Einhausung oder um ein Lichtschrankensystem handeln, es wäre jedoch auch möglich, dass unter dem zweiten Schutzbereich schlicht der Bereich bzw. die Umgebung außerhalb des ersten Schutzbereichs verstanden wird.

Bei einem weiteren bevorzugten Verfahren werden während des Wechselvorgangs wenigstens zeitweise die beiden Schutzbereiche miteinander verbunden, derart, dass der erste Schutzbereich wenigstens zeitweise von der Wechseleinrichtung und/oder Bestandteilen der Wechseleinrichtung erreicht wird. Damit werden bevorzugt während des Wechselvorgangs (bei dem es sich insbesondere um ein vollautomatisches Einlegen und Entnehmen der Blasformeinrichtungen handelt) beide Schutzbereiche miteinander verbunden.

Bei einer weiteren vorteilhaften Ausführungsform werden in einem Arbeitsbetrieb die Umformungsstationen entlang eines kreisförmigen Transportpfades transportiert. Vorteilhaft weist die Umformungseinrichtung einen beweglichen und insbesondere drehbaren Träger auf, an dem eine Vielzahl von Umformungsstationen angeordnet ist. Vorteilhaft werden im Rahmen des Wechselvorgangs wenigstens an einer der Umformungsstationen, bevorzugt an mehreren der Umformungsstationen und besonders bevorzugt an allen Umformungsstationen neue Blasformeinrichtungen bzw. einzuwechselnde Blasformeinrichtungen angebracht.

Bei einem weiteren vorteilhaften Verfahren wird eine Aufnahmeeinrichtung mit (enthaltend) einer Vielzahl von Blasformeinrichtungen, in einen Arbeitsbereich der Wechseleinrichtung verbracht. Bevorzugt wird diese Aufnahmeeinrichtung in den besagten zweiten Schutzbereich verbracht. Bei dieser Aufnahmeeinrichtung kann es sich beispielsweise um ein Magazin handeln, welches Blasformeinrichtungen und/oder Teile von Blasformeinrichtungen enthält. Auch wäre es möglich, dass mehrere Magazine mit Blasformeinrichtungen in den besagten zweiten Schutzbereich verbracht werden, um so den Wechselvorgang durchzuführen. Auf diese Weise ist es möglich, dass sowohl gesamte Blasformeinrichtungen ausgewechselt werden, als auch nur Bestandteile derselben, wie etwa die Bodenteile oder die Seitenteile.

Bevorzugt weisen die Blasformeinrichtungen jeweils wenigstens zwei Seitenteile und ein Bodenteil auf. Dabei ist es, wie oben erwähnt möglich, dass die gesamte Blasformeinrichtung einer Umformungsstation gewechselt wird, es wäre jedoch auch möglich, dass lediglich Teile der Blasformeinrichtung gewechselt werden.

Bei einem weiteren bevorzugten Verfahren wird zu einem Verbinden der beiden Schutzbereiche eine gemeinsame Schnittstelle zwischen den Schutzbereichen geöffnet und insbesondere automatisch geöffnet. So kann es sich beispielsweise bei dieser Schnittstelle um eine Falttüre, ein Rollo oder dergleichen handeln. Auch wäre es denkbar, dass zum Verbinden der beiden Schutzbereiche Lichtschrankeneinrichtungen deaktiviert werden.

Bei einem weiteren bevorzugten Verfahren umfasst die Wechselvorbereitung Prozessschritte, welche aus einer Gruppe von Prozessschritten ausgewählt ist, welche ein Einbringen eines Formenmagazins in eine Magazinaufnahme des Schutzbereiches durch einen Maschinenbediener, ein Schließen des zweiten Schutzbereiches, einen Prüf/Erkennungsprozess der eingebrachten Blasformeinrichtungen und dergleichen enthält.

Bei einem weiteren bevorzugten Verfahren werden vor oder während des Wechselvorgangs Blasformteile identifiziert. So ist es beispielsweise möglich, dass mittels eines Erkennungssystems Blasformeinrichtungen oder deren Bestandteile, wie etwa Bodenteile erkannt werden können. Bei einem weiteren bevorzugten Verfahren können die Blasformteile eindeutig identifiziert werden. Es ist also nicht nur möglich, einen bestimmten Typ an Blasformeinrichtungen zu identifizieren, sondern eine konkrete Blasformeinrichtung bzw. deren Bestandteile. Mit anderen Worten ist bevorzugt ein Erkennungssystem vorgesehen, welches eine individuelle Identifizierung der Blasformeinrichtung bzw. deren Teile erlaubt.

Durch diese individuelle Identifizierung ist es beispielsweise möglich, bestimmte Blasformteile bestimmten Umformungsstationen zuzuordnen. Bevorzugt findet daher die Wechseleinrichtung einen Prüf- und/oder Erkennungsprozess durch. Vorteilhaft werden Blasformteile oder Blasformeinrichtungen identifiziert, um diese Blasformteile und/oder Blasformeinrichtungen vorbestimmten Umformungsstationen zuzuordnen bzw. an diesen zu befestigen. Es kann bevorzugt damit festgelegt werden, dass jede Umformungsstation genau eine bestimmte Blasform erhält.

Im Rahmen der Identifikation können unterschiedliche Merkmale der Blasformeinrichtungen identifiziert und/oder erkannt werden. So kann beispielsweise eine benötigte Nummer einer Blasformeinrichtung festgestellt werden, beispielsweise geprüft werden, ob sich eine Blasformeinrichtung 1 in einem Stellplatz bzw. Magazinplatz 1 befindet. Daneben kann ein bestimmter Formtyp geprüft werden, beispielsweise dessen Innenvolumen oder dessen Gestaltung. Auf diese Weise kann auch ein Abgleich mit dem in einem jeweiligen Rezept angewählten Typ durchgeführt werden (beispielsweise kann überprüft werden, ob falls im Rezept eine 0,5 I Flasche geblasen werden soll, auch tatsächlich eine entsprechende Blasformeinrichtung zur Erzeugung von 0,5 I Flaschen ausgewählt wurde). Daneben kann auch grundsätzlich geprüft werden, ob eine Blasform in einer Magazinvorrichtung vorhanden ist oder nicht. Weiterhin kann, wie unten genauer erläutert, auch geprüft werden, ob eine Blasformeinrichtung lagerichtig in das Magazin eingelegt ist. Auf diese Weise kann in Reaktion später eine entsprechende Entnahme erfolgen.

Bei einem weiteren bevorzugten Verfahren werden vor oder während des Wechselvorgangs den Blasformen und/oder Blasformteilen und insbesondere den identifizierten oder zu identifizierenden Blasform(teil)en für ihre Position charakteristische Daten zugeordnet. Dabei kann es sich wie erwähnt, beispielsweise um eine Position innerhalb eines Magazins handeln oder um eine Lage innerhalb eines Magazins. Auch diese Daten können in eine Steuerung eingelesen werden. Diese kann dann bei der Entnahme der Blasformeinrichtungen entsprechend hierauf reagieren und beispielsweise Greifprozesse anpassen. Daneben ist es auch möglich, dass ermittelte Werte, beispielsweise eine bestimmte Lage einer Blasformeinrichtung oder auch sonstige Werte, welche die Blasformeinrichtung identifizieren und/oder charakterisieren, ausgegeben werden.

So kann beispielsweise eine Displayeinrichtung vorgesehen sein, auf der jeweils die genannten Werte ausgegeben werden. In diesem Falle kann der Benutzer sehr schnell überprüfen, ob beispielsweise eine Positionierung der Blasformeinrichtung zutreffend ist oder auch generell die richtige Blasformeinrichtung ausgewählt werden soll. Bevorzugt werden diese während des Prüf- oder Erkennungsprozesses erkannten Werte, wie etwa die Positionen der Blasformeinrichtungen in eine Steuerungseinrichtung eingelesen und diese Informationen werden bevorzugt auch bei einem Wechselvorgang verwendet, beispielsweise um eine korrekte Blasformnummer in eine hierfür vorgesehene Umformungsstation einzulegen und dies insbesondere auch unabhängig von einem Lagerort der Blasformeinrichtung innerhalb eines Magazins. Bei einem weiteren bevorzugten Verfahren weist ein Wechselvorgang als Verfahrensschritte zumindest das Öffnen des zweiten Schutzbereichs auf, das Einbringen einer Aufnahmeeinrichtung mit einer Vielzahl von Blasformteilen in diesen Schutzbereich oder in einen Aktionsbereich der Wechseleinrichtung und/oder die Identifikation wenigstens eines Teils der eingebrachten Blasformeinrichtungen oder Blasformteile.

Die vorliegende Erfindung ist weiterhin auf eine Vorrichtung zum Umformen von Kunststoffvorformlingen zu Kunststoffbehältnissen gerichtet. Diese Vorrichtung weist eine Transporteinrichtung auf, welche die Kunststoffvorformlinge entlang eines vorgegebenen Transportpfads transportiert. Dabei weist die Transporteinrichtung einen beweglichen (und insbesondere drehbaren) und zumindest mittelbar an einem stationären Basisträger angeordneten Stationsträger auf, an dem eine Vielzahl von Umformungsstationen angeordnet ist. Dabei weisen diese Umformungsstationen jeweils Blasformeinrichtungen auf, welche jeweils Hohlräume ausbilden, innerhalb derer die Kunststoffvorformlinge zu den Kunststoffbehältnissen umformbar sind und diese Blasformeinrichtungen sind dabei jeweils an Blasformträgern angeordnet, und die Vorrichtung weist weiterhin eine Wechseleinrichtung auf, welche geeignet und dazu bestimmt ist, zumindest die Blasformeinrichtungen von deren Blasformträgern zu entfernen und/oder Blasformeinrichtungen an den Blasformträgern anzuordnen. Daneben weist die Wechseleinrichtung eine Greifeinrichtung zum Greifen der Blasformeinrichtung auf. Erfindungsgemäß weist die Vorrichtung einen ersten Schutzbereich auf, innerhalb dessen die Umformungseinrichtung betrieben wird, und weiterhin weist die Vorrichtung einen zweiten Schutzbereich auf, innerhalb dessen wenigstens abschnittsweise die Wechseleinrichtung angeordnet ist, wobei der erste Schutzbereich und der zweite Schutzbereich unabhängig voneinander zugänglich machbar sind und/oder der erste Schutzbereich und der zweite Schutzbereich miteinander in eine unterbrechbare Verbindung bringbar sind.

Es wird daher auch verfahrensseitig vorgeschlagen, dass getrennte Schutzbereiche vorgesehen sind und insbesondere die Wechseleinrichtung in einem anderen Schutzbereiche angeordnet werden kann, als die Umformungseinrichtung. Diese Vorgehensweise ermöglicht, wie oben erwähnt einen Beginn einer Wechselvorbereitung in einem Arbeitsbetrieb der eigentlichen Umformungseinrichtung.

Bevorzugt befindet sich die Wechseleinrichtung wenigstens zeitweise vollständig in dem besagten zweiten Schutzbereich.

Der erste Schutzbereich und der zweite Schutzbereich sind über eine Schnittstelle miteinander verbunden, wobei diese Schnittstelle auch eine Unterbrechung der Verbindung ermöglicht. Dabei kann diese Schnittstelle beispielsweise, wie oben erwähnt, Falltüren, Türen, Schiebetüren, Rollos oder dergleichen aufweisen.

Bei einer weiteren vorteilhaften Ausführungsform weist die Wechseleinrichtung eine Greifeinrichtung zum Greifen der Blasformeinrichtung auf, wobei diese Greifeinrichtung in wenigstens zwei unterschiedliche Richtungen beweglich und/oder um wenigstens drei unterschiedliche Achsen schwenkbar ist.

Die vorliegende Erfindung ist weiterhin auf eine Vorrichtung zum Umformen von Kunststoffvorformlingen zu Kunststoffbehältnissen gerichtet. Diese Vorrichtung weist eine Transporteinrichtung auf, welche die Kunststoffvorformlinge entlang eines vorgegebenen Transportpfads transportiert, wobei die Transporteinrichtung einen beweglichen (und bevorzugt zumindest mittelbar an einem stationären Basisträger angeordneten) Stationsträger aufweist, an dem eine Vielzahl von Umformungsstationen ist, wobei diese Umformungsstationen jeweils Blasformeinrichtungen aufweisen, welche jeweils Hohlräume ausbilden, innerhalb derer die Kunststoffvorformlinge zu den Kunststoffbehältnissen umformbar sind und diese Blasformeinrichtungen jeweils an Blasformträgern angeordnet sind, und die Vorrichtung weiterhin eine Wechseleinrichtung aufweist, welche geeignet und dazu bestimmt ist, zumindest die Blasformeinrichtungen von deren Blasformträgern zu entfernen und/oder Blasformeinrichtungen an den Blasformträgern anzuordnen.

Bei einer erfindungsgemäßen Ausgestaltung weist die Wechseleinrichtung eine Identifizierungseinrichtung zum Identifizieren von Blasformeinrichtungen oder Blasformteilen auf

Vorteilhaft weist diese Wechseleinrichtung wenigstens zwei Greifeinrichtungen zum Greifen von Blasformeinrichtungen auf, wobei wenigstens eine dieser beiden Greifeinrichtungen sowohl zum Greifen von aus mehreren Blasformteilen gebildeten Blasformeinrichtungen als auch zum Greifen von einzelnen Blasformteilen geeignet ist. Durch diese Ausgestaltung wird eine höhere Variabilität der Umformungseinrichtung bzw. des Wechselvorgangs erreicht. Es wird darauf hingewiesen, dass diese Ausgestaltung mit zwei Greifeinrichtungen auch unabhängig von dem Vorhandensein einer Identifizierungseinrichtung Anwendung finden kann. Die Anmelderin behält sich daher vor, auch auf eine Ausgestaltung Schutz zu beanspruchen, welche zwar keine Identifizierungseinrichtung aufweist, dafür aber eine Wechseleinrichtung mit wenigstens zwei Greifeinrichtungen.

Es wird daher vorgeschlagen, dass die Greifeinrichtung in unterschiedlicher Weise die Blasformeinrichtungen oder Elemente davon übernehmen kann. So wäre es beispielsweise möglich, dass die Greifeinrichtung zwei Formpakete aufnehmen kann oder auch die beiden Seitenteile der Blasformeinrichtung als Paket und einen Boden der Blasformeinrichtung separat.

Bei einer bevorzugten Ausführungsform ist diese Greifeinrichtung in wenigstens zwei unterschiedliche Richtungen beweglich und/oder um wenigstens zwei unterschiedliche Achsen schwenkbar.

Bei einer bevorzugten Ausführungsform sind genau zwei Greifeinrichtungen vorgesehen, welche beispielsweise an einem gemeinsamen Träger angeordnet sein können. So wäre es möglich, dass eine dieser Greifeinrichtungen einen Boden einer Blasform aufnimmt und die andere lediglich die Seitenteile.

Bei einer bevorzugten Ausführungsform sind beide Greifeinrichtungen sowohl zum Greifen von aus mehreren Blasformteilen gebildeten Blasformeinrichtungen, als auch zum Greifen von einzelnen Blasformteilen geeignet. Auf diese Weise kann wiederum eine höhere Variabilität bzw. Versatilität der Greifeinrichtungen erreicht werden.

Bei einer weiteren vorteilhaften Ausgestaltung sind die Greifeinrichtungen identisch ausgebildet. Bevorzugt greifen die Greifeinrichtungen die Blasformeinrichtungen nur in einem oberen Bereich der Blasformeinrichtungen. Bevorzugt handelt es sich hierbei um ein oberes Drittel der Blasformeinrichtung und insbesondere um einen Abschnitt, der in einem verbauten Zustand aus einer Formaufnahme bzw. einem Blasformträger herausragt. So ist es beispielsweise möglich, dass die Blasformeinrichtung Vorsprünge aufweisen kann, in welche entsprechende Eingriffsmittel der Greifeinrichtungen eingreifen können.

So ist es beispielsweise möglich, dass die zwei Greifeinrichtungen zwei vollständige Blasformeinrichtungen entnehmen können oder, wie oben erwähnt, Teile einer einzelnen Blasformeinrichtung.

Bei einer weiteren vorteilhaften Ausführungsform sind die beiden Greifeinrichtungen an einem gemeinsamen drehbaren und/oder schwenkbaren Träger angeordnet. So wäre es beispielsweise möglich, dass dieser an eine Umformungsstation herangeführt wird, anschließend die erste Greifeinrichtung einen Vorgang durchführt, anschließend der Träger gedreht wird (beispielsweise um 180°) und die zweite Greifeinrichtung einen weiteren Vorgang durchführt, etwa eine neue Blasformeinrichtung an der Umformungsstation anordnet. Bei einer bevorzugten Ausführungsform ist dabei die Greifeinrichtung und/oder dieser Träger so gestaltet, dass ein Umschalten der Greifeinrichtungen bezogen auf eine Mitte der Umformungsstationen in einem kreisförmigen Raum erfolgt, der kleiner ist als 2000 mm, bevorzugt kleiner als 1500 mm und besonders bevorzugt kleiner als 1000 mm. Bevorzugt ist dieser Träger um eine Drehachse drehbar, welche parallel zu Längsrichtungen der Blasformeinrichtungen bzw. parallel zu Längsrichtungen der zu expandierenden Behältnisse verläuft. In einem Wechselbetrieb kann dabei diese Drehachse wenigstens zeitweise vertikal ausgerichtet sein.

Weiterhin wäre es bei dieser Vorgehensweise möglich, dass eine Verfahrbewegung der Wechseleinrichtung bzw. des Roboters dazu genutzt wird, um eine zweite Greiferposition in eine Wechselstellung zu bewegen. Bei einer weiteren vorteilhaften Ausführungsform weist wenigstens eine Greifeinrichtung eine Aktoreinrichtung auf, um eine zweite Greiferposition in eine Wechselstellung zu bewegen. So kann beispielsweise dieser Aktor in Form eines Rotationsantriebs den besagten Träger, an dem die Greifeinrichtungen angeordnet sind, drehen oder schwenken.

Bei einer weiteren vorteilhaften Ausführungsform (oder der oben beschriebenen erfindungsgemäßen Ausführungsform) weist die Wechseleinrichtung eine Identifizierungseinrichtung zum Identifizieren von Blasformeinrichtungen oder Blasformteilen auf. So wäre es beispielsweise möglich, dass ein Greifkopf oder die Greifeinrichtung der Wechseleinrichtung ein RFID-Lese- und/oder Schreibmodul aufweist, um den Typ einer Blasformeinrichtung und/oder eine Nummer der Blasformeinrichtung zu erfassen. Bei einer weiteren vorteilhaften Ausführungsform weist jede Blasformeinrichtung ein entsprechendes Lese- oder Schreibmittel, wie beispielsweise einen RFID-Chip auf, der die Blasformeinrichtung eindeutig kennzeichnet. Auf diese Weise ist, wie oben erwähnt, ein individuelles Bestücken der einzelnen Umformungsstationen mit den Blasformeinrichtungen möglich.

Bevorzugt weist jede Greifeinrichtung eine derartige Identifikationseinrichtung auf. So wäre es beispielsweise möglich, dass die Greifeinrichtung in einem Wechselbetrieb an die Blasformeinrichtungen herangeführt wird, und dabei diese eindeutig identifiziert.

Bei einer weiteren vorteilhaften Ausführungsform weist die Identifizierungseinrichtung eine RFID-Erfassungseinrichtung auf. Besonders bevorzugt weist diese Erfassungseinrichtung ein Lese- und/oder Schreibmodul auf. Dieses Lesemodul kann dabei insbesondere die RFID-Tags an den Blasformeinrichtungen erkennen. Bei einer weiteren vorteilhaften Ausführungsform weist wenigstens eine Blasformeinrichtung ein von einer RFID-Erfassungseinrichtung auslesbares RFID-Element auf.

Vorteilhaft die Wechseleinrichtung eine Positionserfassungseinrichtung zum Erfassen einer geometrischen Position von Blasformen und/oder Blasformteilen auf. Auf diese Weise kann, wie oben erwähnt, beispielsweise eine Fehlstellung von Blasformeinrichtungen innerhalb eines Magazins erkannt werden. Bei einer bevorzugten Ausführungsform handelt es sich bei dieser Positionserfassungseinrichtung um einen Näherungssensor oder Näherungsinitiator. So kann beispielsweise die Greifeinrichtung der Wechseleinrichtung einen derartigen Näherungsinitiator aufweisen, um eine geometrische Position der Blasformeinrichtungen zu erkennen.

Bei einer weiteren vorteilhaften Ausführungsform weisen beide Greifereinrichtungen entsprechende Sensoren auf, um eine korrekte Aufnahme der Blasformeinrichtungen zu erkennen. Daneben weisen die Greifereinrichtungen bevorzugt auch Aktoreinrichtungen auf, um die Blasform sicher fixieren zu können und um so einen sicheren Transport zu gewährleisten. Bevorzugt handelt es sich bei wenigstens einer Greifeinrichtung und besonders bevorzugt bei beiden Greifeinrichtungen um aktive Greifeinrichtungen, d.h. Greifeinrichtungen welche eine angetriebene Greifbewegung ausführen können, etwa eine Bewegung bei der ein Greifelement auf ein anderes Greifelement zugestellt wird.

Bei einer weiteren bevorzugten Ausführungsform sind diese genannten Sensoren und/oder Aktoren bezogen auf eine Längsausdehnung einer Blasformeinrichtung nur in einem oberen Drittel der Blasformeinrichtungen oder oberhalb angeordnet. Auf diese Weise ist ein sicheres Greifen und Transportieren einer an einem Träger angeordneten Blasformeinrichtung von diesem Träger weg möglich.

Bevorzugt weist die Blasformeinrichtung in einem oberen Bereich, insbesondere einem oberen Drittel Haltemittel auf, welche ein Halten der Blasformeinrichtung durch die Wechseleinrichtung ermöglichen. So kann beispielsweise an einer Oberseite der Blasformeinrichtung, insbesondere an einer Oberseite der beiden Seitenteile der Blasformeinrichtung ein Vorsprung (insbesondere ein Pin) vorgesehen sein, in den die Greifeinrichtung eingreifen kann. Daneben kann in einem oberen Bereich der Blasformeinrichtung eine Nut vorgesehen sein, in den die Greifeinrichtung eingreifen kann, um die Blasformeinrichtung zu greifen. Dabei kann es sich um eine erste Nut handeln, die in einem Bereich des ersten Seitenteils ausgebildet ist und um eine zweite Nut, die in einem Bereich des zweiten Seitenteils ausgebildet ist. Bevorzugt können sich diese erste Nut und die zweite Nut in einem zusammengesetzten Zustand der Blasformeinrichtung aneinander anschließen. Daneben kann die Blasformeinrichtung ein Zentrierelement aufweisen, welches eine Zentrierung gegenüber einer Greifeinrichtung bewirkt. Diese Zentriereinrichtung kann dabei beispielsweise als Zentrierkonus ausgebildet sein. Diese Zentriereinrichtung kann dabei insbesondere an einer Oberseite der Blasformeinrichtung und insbesondere an den Oberflächen der beiden Seitenteile angeordnet sein.

Daneben weist bevorzugt die Blasformeinrichtung Befestigungseinrichtungen auf, um die Blasformeinrichtung an einem Träger, insbesondere einem Blasformträger zu befestigen. Diese Befestigungseinrichtung kann dabei beispielsweise an einer Aussenwandung der Blasformeinrichtung und insbesondere deren Seitenteile angeordnet sein. Bevorzugt befindet sich auch diese Befestigungseinrichtung in einem oberen Drittel der Blasformeinrichtung bzw. der Seitenteile.

Daneben können sich auch Zentrierelemente in einem Umfangsbereich der Blasformeinrichtung befinden, beispielsweise an den Umfangswandungen der beiden Seitenteile. Bei diesen Zentrierelementen kann es sich beispielsweise um Zentrierstifte handeln.

Bei einer weiteren vorteilhaften Ausführungsform sind Ansteuerungsleitungen vorgesehen, welche beispielsweise Aktoren der Greifeinrichtungen ansteuern. Dabei kann es sich beispielsweise um Steuer-, Sensor- oder Leistungsversorgungskabel für die Greifeinrichtung handeln. Vorteilhaft verlaufen derartige Leitungen zumindest bereichsweise innerhalb der Wechseleinrichtung und/oder können bevorzugt über Energieüberträger, wie beispielsweise Schleifringe direkt durch Achsen der Wechseleinrichtung bzw. des Roboters geführt werden.

Die vorliegende Erfindung ist weiterhin auf ein Verfahren zum Betreiben einer Umformungseinrichtung zum Umformen von Kunststoffvorformlingen zu Kunststoffbehältnissen gerichtet, wobei in einem Arbeitsbetrieb der Vorrichtung die Kunststoffvorformlinge mittels einer Vielzahl von Umformungsstationen entlang eines vorgegebenen Transportpfads transportiert werden und durch Beaufschlagung mit einem fließfähigen und insbesondere gasförmigen Medium zu den Kunststoffbehältnissen expandiert werden und wobei zum Expandieren der Kunststoffvorformlinge Blasformeinrichtungen verwendet werden, in deren Inneren die Kunststoffvorformlinge zu den Kunststoffbehältnissen expandiert werden und wobei in einem Wechselbetrieb zumindest eine der Blasformeinrichtungen der Vorrichtung entnommen und/oder eine der Blasformeinrichtungen an einem Blasformträger der Vorrichtung angeordnet wird. (bzw. allgemein wenigstens eine Blasformeinrichtung an einer Umformungsstation angeordnet wird).

Erfindungsgemäß wird zum Wechseln der Blasformeinrichtungen eine Wechseleinrichtung verwendet und mittels einer Identifikationseinrichtung wird wenigstens ein Teil einer zu wechselnden Blasformeinrichtung identifiziert.

Auch bei dieser Ausgestaltung wird daher vorgeschlagen, dass eine Identifikation der Blasformeinrichtungen vorgenommen wird, insbesondere um eine individuelle Zuordnung der Blasformeinrichtungen an die Umformungsstationen zu ermöglichen, selbst wenn die Blasformeinrichtungen fehlerhaft in einem Magazin abgelegt sein sollten. Vorteilhaft werden zum Wechseln der Blasformeinrichtungen zwei Greifeinrichtungen verwendet, wobei besonders bevorzugt eine dieser beiden Greifeinrichtungen sowohl zum Greifen von aus mehreren Blasformteilen gebildeten Blasformeinrichtungen, als auch zum Greifen von einzelnen Blasformteilen (beispielsweise Seitenteile oder Bodenteile) geeignet und/oder bestimmt ist.

Bei einer weiteren vorteilhaften Ausführungsform greift wenigstens eine Greifeinrichtung wenigstens eine Blasformeinrichtung in einem bezogen auf eine Längsrichtung der Blasformeinrichtung oberen Bereich. Bevorzugt handelt es sich hierbei um ein oberes Drittel der Blasformeinrichtung. Auf diese Weise kann besonders bevorzugt die Blasformeinrichtung hängend an der Greifeinrichtung transportiert werden.

Bevorzugt halten wenigstens zeitweise die beiden Greifeinrichtungen jeweils Blasformeinrichtungen bzw. Teile der Blasformeinrichtungen. So ist es möglich, dass wenigstens zeitweise beide Greifeinrichtungen mit einer vollständigen Blasformeinrichtung bestückt sind, es wäre jedoch auch möglich, dass zeitweise eine der Greifeinrichtungen mit ersten Bestandteilen einer Blasformeinrichtung bestückt ist (beispielsweise Seitenteilen) und die zweite Greifeinrichtung mit einem anderen Bestandteil der Blasformeinrichtung (wie beispielsweise einen Bodenteil).

Bei einer weiteren vorteilhaften Ausführungsform weist wenigstens eine Greifeinrichtung und weisen bevorzugt beide Greifeinrichtungen Sensoren auf, um eine korrekte Aufnahme der Blasformeinrichtung zu erkennen und/oder Aktoreinrichtungen, um die Blasformeinrichtung sicher zu fixieren. Bei diesen Sensoreinrichtungen kann es sich beispielsweise um Näherungssensoren handeln.

Bei einem weiteren bevorzugten Verfahren kann (insbesondere bei einer Entnahme von Blasformteilen) folgender Ablauf durchgeführt werden. So kann eine erste Greifeinrichtung nur die Seitenteile (insb. in einem oberen Drittel derselben) greifen und diese auch zuerst fixieren und/oder entnehmen. In einem weiteren Schritt ist es denkbar, dass sich ein Blasformträger öffnet und nunmehr die Blasformeinrichtung lediglich an der Greifeinrichtung angeordnet ist. Bei einem weiteren Verfahrensschritt fährt die Greifeinrichtung mit den daran nunmehr angeordneten Seitenteilen aus der Umformungsstation. Im weiteren Verfahrensschritt werden die Greifeinrichtungen umgeschaltet, beispielsweise der Träger mit den beiden Greifeinrichtungen gedreht, sodass nunmehr das Bodenteil der Blasformeinrichtung entnommen werden kann. Die zweite Greifeinrichtung nimmt nunmehr den Bodenteil der Blasformeinrichtung (insb. unterhalb des für ein Behältnis formgebenden Bereiches) auf. Auf diese Weise kann derjenige Bereich, der die Form des Behältnisses ausprägt geschont werden.

Bei einem weiteren bevorzugten Verfahren werden die Blasformeinrichtungen von den Umformungsstationen entnommen, wobei eine Entnahmebewegung wenigstens zeitweise senkrecht zu einer Längsrichtung der Blasformteile erfolgt. So ist es insbesondere möglich, dass vor einem Umschalten der Greifeinrichtung, beispielsweise vor einem Drehen des Trägers, an dem die Blasformeinrichtungen angeordnet sind, eine im Wesentlichen, bezogen auf die Blasformmaschinenmitte radiale und bezogen auf eine Hauptachse des Formträgers senkrechte Bewegung der Greiferaufnahme erfolgt, um die Alt-Form aus dem Blasformträger zu entnehmen.

Dabei ist es weiterhin, wie oben erwähnt, möglich, dass eine Verfahrbewegung der Wechseleinrichtung genutzt wird um die zweite Greifeinrichtung in eine Position zu bringen.

Bei einem bevorzugten Verfahren werden also zeitlich hintereinander die Seitenteile und das Bodenteil der Blasformeinrichtung entnommen.

Bei einem weiteren bevorzugten Verfahren führt die Wechseleinrichtung ein Ablegen von einer Altform und das Aufnehmen einer Neuform durch, während der Blasformträger schließt und/oder verriegelt und/oder die Transporteinrichtung sich weiterbewegt, insbesondere das Blasrad weiterdreht. Auf diese Weise können wiederum die Gesamtwechselzeiten reduziert werden.

Bei einem weiteren bevorzugten Verfahren wird wenigstens eine Greifeinrichtung abwechselnd mit einer von der Umformungsstation zu entnehmenden und einer an der Umformungsstation anzuordnenden Blasformeinrichtung bestückt. Dabei kann sich, wie oben erwähnt, während dieses Wechselvorgangs das Transportrad weiterdrehen, insbesondere während eine Altform abgelegt und eine Neuform entnommen wird.

Mit anderen Worten ist es denkbar, dass abwechselnd eine Greifeinrichtung mit der Alt- und der Neuform bestückt wird, um ein Umschalten der Greifeinrichtungen, beispielsweise beim Ablegen der Altform und dem Aufnehmen der Neuform zu vermeiden.

Bei einer weiteren vorteilhaften Ausführungsform sind die Greifeinrichtungen derart ausgeführt, dass Schnittstellen zur Aufnahme der Blasformeinrichtungen bezogen auf die Mitten der Greifeinrichtungen spiegelbildlich ausgeführt sind. Auf diese Weise können mit den gleichen Greifeinrichtungen identische Blasformeinrichtung gegriffen werden.

Bei einer weiteren vorteilhaften Ausführungsform steuert eine Steuerungseinrichtung die Greifeinrichtung derart, dass zuerst eine Altform in eine freie Position einer Aufnahmeeinrichtung wie eines Magazins abgelegt wird, und bezogen auf die zuletzt entnommene Altform die numerisch nächste Neuform (beispielsweise bei einer chaotischen Einlagerung) aus dem Magazin entnommen wird. Falls die Blasformeinrichtungen teilweise entnommen werden, etwa zunächst die Seitenteile und anschließend das Bodenteil, ist es möglich, dass die Bodenteile in einem separaten Magazin abgelegt werden. Bevorzugt weist dieses Magazin matrixförmige Aufnahmepositionen auf.

Bei einem weiteren vorteilhaften Verfahren werden die Bodenteile der Blasformeinrichtung bezüglich einer Achse, welche senkrecht zu einer Längsrichtung der umzuformenden Behältnisse steht gewendet. Insbesondere erfolgt ein derartiges Wenden nach der Entnahme aus den Umformungsstationen. Bevorzugt werden die Bodenteile der Blasformeinrichtungen mit einer formgebenden Seite, d. h. derjenigen Oberfläche, welche das Behältnis erzeugt, nach unten in einem Magazin abgelegt. Auf diese Weise können diese Oberflächen besser geschützt werden.

Bei einer weiteren vorteilhaften Ausführungsform sind Schnittstellen der Greifeinrichtung derart ausgeführt, dass ein im Wesentlichen vertikaler Transport der Blasformeinrichtungen erfolgt ohne diese (bezogen auf ihre Ursprungslage in der Formenaufnahme) zu schwenken oder zu kippen. Bevorzugt ist es möglich, dass die Bodenteile nach dem Entnehmen aus der Formaufnahme und vor dem Ablegen in das Magazin gedreht werden. Vorteilhaft wird diese Drehbewegung durch die Wechseleinrichtung bzw. den Körper selbst oder auch durch einen Aktor an der Greifeinrichtung durchgeführt.

Bei einem weiteren bevorzugten Verfahren steuert eine übergeordnete Steuerung ein Umschalten der Greifeinrichtungen derart, dass diese Informationen aus dem Einlesen der Formpositionen aus dem Magazin (beispielsweise über RFID) und/oder Rezeptinformationen verwendet, um diese entsprechende umzuschalten.

Bevorzugt bewegt sich jedoch die Wechseleinrichtung innerhalb eines begrenzten Arbeitsbereiches. Dies bedeutet, dass insbesondere auch die Entnahme- und Zuführbewegung für die Blasformeinrichtungen in einem begrenzten Arbeitsbereich stattfindet. In Reaktion auf die äußeren Kräfte kann eine Position von diesem Arbeitsbereich abweichen. Ansonsten wird jedoch bevorzugt dieser definierte Arbeitsbereich eingehalten, insbesondere während eines Formenwechsels.

Dabei ist es vorteilhaft möglich, dass der Arbeitsbereich der Wechseleinrichtung sicherheitstechnisch und insbesondere mechanisch begrenzt wird. Eine derartige Begrenzung wäre durch unterschiedliche Maßnahmen möglich, etwa durch Lichtschranken, welche eine falsche bzw. zu weit gehende Bewegung der Wechseleinrichtung erfassen und in der Folge entweder eine Rückführung oder einen Notstopp der Wechseleinrichtung bewirken. Daneben wäre jedoch auch eine Begrenzung des Arbeitsbereiches durch mechanische Elemente, wie beispielsweise Anschläge, möglich.

Weitere Vorteile und Ausführungsformen ergeben sich aus den beigefügten Zeichnungen. Darin zeigen:
- Fig. 1: Eine schematische Darstellung einer erfindungsgemäßen Vorrichtung;
- Fig. 2: eine Darstellung der Vorrichtung mit dargestellter Wechseleinrichtung;
- Fig. 3: eine Draufsicht auf die in Fig. 2 gezeigte Vorrichtung;
- Fig. 4: eine weitere Darstellung der in Fig. 2 gezeigten Vorrichtung;
- Fig. 5: eine weitere Darstellung der in Fig. 2 gezeigten Vorrichtung in einer weiteren Betriebsposition;
- Fig. 6: eine Darstellung einer Umformungsstation;
- Fig. 7: eine Darstellung einer Formschale für eine Blasformeinrichtung;
- Fig. 8: eine Darstellung einer Wechseleinrichtung;
- Fig. 9: eine Darstellung einer Greifeinrichtung zum Greifen einer Blasformeinrichtung;
- Fig. 10: eine Darstellung einer Wechseleinrichtung mit einer Blasformeinrichtung;
- Fig. 11: eine Darstellung zur Veranschaulichung möglicher Positionen der Wechseleinrichtung;
- Fig. 12: eine Darstellung eines Magazins mit einer Blasformeinrichtung;
- Fig. 13a - 13h: Darstellungen zur Veranschaulichung eines teilweisen Wechsels einer Blasformeinrichtung;
- Fig. 14a,b: zwei Darstellungen einer Greifeinrichtung;
- Fig. 15a, b: zwei weitere Darstellungen einer Greifeinrichtung;
- Fig. 16: eine Darstellung einer erfindungsgemäßen Vorrichtung mit zwei Schutzbereichen;
- Fig. 17: eine Darstellung einer Wechseleinrichtung mit zwei Greifeinrichtungen; und
- Fig. 18: eine Darstellung der Greifeinrichtung aus Fig. 17 in einem anderen Besetzungszustand.

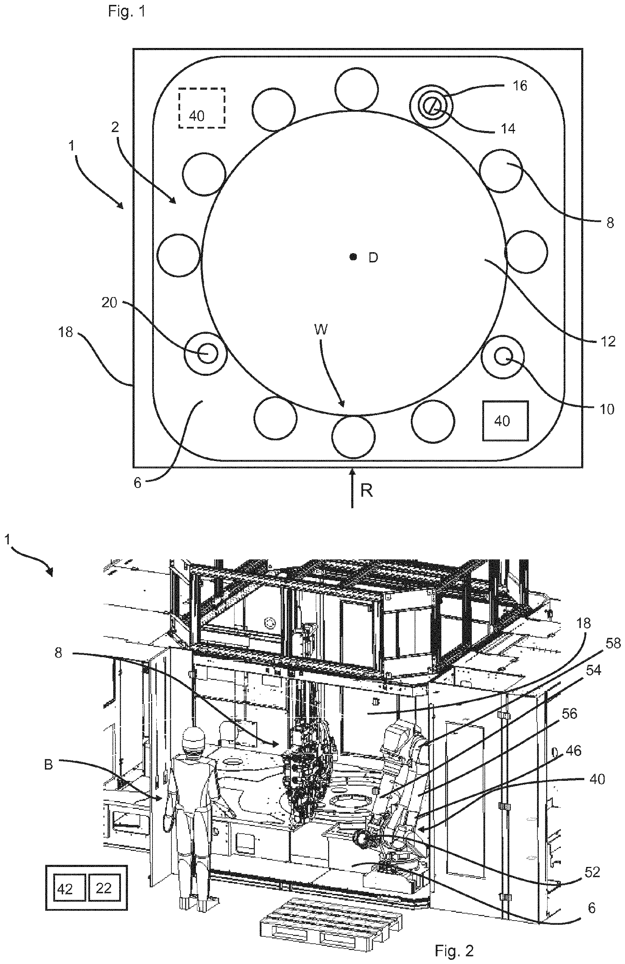

Fig. 1 zeigt eine schematische Darstellung einer Vorrichtung 1 zum Umformen von Kunststoffvorformlingen zu Kunststoffbehältnissen. Dabei werden die Kunststoffvorformlinge 10 den einzelnen Umformungsstationen 8 zugeführt und zu Kunststoffbehältnissen 20 expandiert. Nach dieser Expansion werden die Kunststoffbehältnisse wieder von der Vorrichtung entnommen. Zu diesem Zwecke kann ein Zuführstern vorgesehen sein, der die Kunststoffvorformlinge der Vorrichtung 1 zuführt sowie auf eine Abführeinrichtung, insbesondere ebenfalls ein Transportstern, der die fertiggestellten Behältnisse von der Vorrichtung abführt. Die Vorrichtung 1 weist einen Stationsträger 12 auf, an dem eine Vielzahl von Umformungsstationen 8 angeordnet ist. Dieser Stationsträger kann dabei beispielsweise, wie in Fig. 1 gezeigt, ein Blasrad sein, welches bezüglich einer Drehachse D (welche hier senkrecht zu der Figurenebene und damit vertikal verläuft) drehbar ist. Jede einzelne Umformungsstation weist dabei jeweils eine Blasformeinrichtung 14 auf. Diese Blasformeinrichtung 14 setzt sich aus zwei Seitenteilen und einem Bodenteil zusammen. Diese Blasformeinrichtungen können gemäß der Erfindung ausgewechselt werden. Die Blasformeinrichtungen 14 sind dabei an Blasformträgern 16 angeordnet und können von diesen entnommen bzw. an diesen angeordnet werden.

Das Bezugszeigen 40 kennzeichnet eine Wechseleinrichtung, welche dazu dient, die Blasformeinrichtungen von deren Blasformträgern zu entfernen oder die Blasformeinrichtungen an den Blasformträgern anzuordnen. Das Bezugszeichen 6 kennzeichnet einen Basisträger, an dem der Stationsträger 12 drehbar gelagert ist. An bzw. neben dem Basisträger 6 ist auch die Wechseleinrichtung 40 angeordnet. Damit kann die Wechseleinrichtung 40 in die Vorrichtung integriert werden. Das Bezugszeichen 18 kennzeichnet ein Gehäuse, welches zumindest teilweise den Stationsträger 12 umgibt, welches jedoch bevorzugt, wie unten gezeigt wird, auch die Wechseleinrichtung 40 einschließen bzw. einhausen kann.

Das Bezugszeichen W kennzeichnet eine Wechselposition. Wie oben erwähnt, werden die Blasformeinrichtungen bevorzugt an einer bestimmten Wechselposition eingewechselt. Dies bedeutet, dass die Umformungsstationen durch eine Drehung des Trägers 12 sukzessive in diese Wechselposition W gefahren werden können und dieser Wechselposition dann die alten Blasformeinrichtungen entnommen und bevorzugt auch neue Blasformeinrichtungen zugeführt werden können. Das Bezugszeichen R kennzeichnet eine radiale Richtung. In dieser radialen Richtung wird die Wechseleinrichtung bzw. eine Greifeinrichtung der Wechseleinrichtung bevorzugt auf die Umformungsstationen bzw. die Blasformeinrichtungen zugestellt, um diese zu wechseln.

Fig. 2 zeigt eine perspektivische Darstellung einer Vorrichtung 1, wobei hier lediglich eine Umformungseinrichtung bzw. Umformungsstation 8 dargestellt ist. Der Stationsträger an dem diese angeordnet ist, ist hier ebenfalls nicht dargestellt. Weiterhin erkennt man jedoch wieder den Basisträger 6, an dem die Wechseleinrichtung 40 angeordnet ist. Diese Wechseleinrichtung 40 weist hier einen ersten schwenkbaren Arm 56 sowie einen zweiten schwenkbaren Arm 54 auf. Über eine Gelenk- und Antriebsverbindung sind diese beiden Arme schwenkbar miteinander verbunden.

Das Bezugszeichen 52 kennzeichnet eine Greifeinrichtung, welche dazu dient, um die Blasformeinrichtungen zu greifen und zu transportieren. Diese Greifeinrichtung ist dabei wiederum schwenkbar an dem zweiten Arm 54 angeordnet und bevorzugt auch drehbar. Damit ist insgesamt die Greifeinrichtung um wenigstens drei, bevorzugt um wenigstens vier Achsen im Raum schwenkbar. Daneben wäre es auch möglich, wie durch das gestrichelte Rechteck dargestellt ist, dass mehrere Wechseleinrichtungen vorgesehen sind, wobei diese insbesondere jeweils wenigstens mittelbar an dem Basisträger 6 angeordnet sind. Auf diese Weise könnten in einem Wechselbetrieb schneller die einzelnen Blasformeinrichtungen ausgewechselt werden.

Das Bezugszeichen 46 kennzeichnet schematisch eine Erfassungseinrichtung, welche auf die Wechseleinrichtung 40 bzw. die Greifeinrichtung 52 wirkende Kräfte erfasst, um so im Notfall abschalten zu können. Vorteilhaft weist die Vorrichtung mehrere derartiger Erfassungseinrichtungen auf, wobei bevorzugt jeder einzelnen Antriebseinrichtung, welche ein Bewegen der Wechseleinrichtung 40 bzw. der Greifeinrichtung 52 bewirkt, zugeordnet ist. Bei diesen Erfassungseinrichtungen kann es sich beispielsweise um Kraftmesseinrichtungen handeln, welche tatsächliche Kräfte, Drehmomente und dergleichen bestimmen. Es wäre jedoch auch möglich, dass die Kräfte aus Parametern des jeweiligen Antriebs bestimmt werden, etwa aus Strömen oder dergleichen.

Das Bezugszeichen B kennzeichnet einen Benutzer, der die Anlage bedient. Dieser kann sich vorteilhaft während eines Betriebs der Wechseleinrichtung nicht in Bereichen bewegen, welche von der Wechseleinrichtung 40 erreicht werden können.

Das Bezugszeichen 22 kennzeichnet eine Steuerungseinrichtung zum Steuern der Wechseleinrichtung. Das Bezugszeichen 42 kennzeichnet eine Steuerungseinrichtung zum Steuern der Umformungseinrichtung selbst. Dabei können diese beiden Steuerungseinrichtungen miteinander interagieren, insbesondere für einen Wechselbetrieb zum Auswechseln der Blasformeinrichtungen. Es ist dabei möglich, dass die Wechseleinrichtung 40 in einem normalen Arbeitsbetrieb der Vorrichtung in eine Ruhestellung verfährt, in der die Wechseleinrichtung einen möglichst geringen Platz einnimmt.

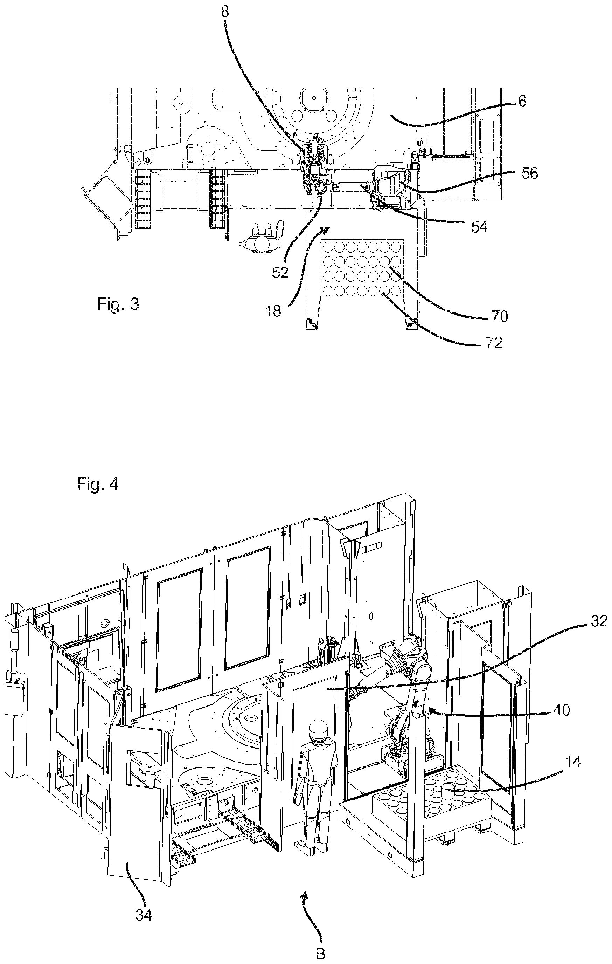

Fig. 3 zeigt eine Draufsicht auf die in Fig. 2 gezeigte Vorrichtung. Man erkennt hier, dass die Wechseleinrichtung 40 ebenfalls in das Gehäuse 18 integriert ist. Bei dem in Fig. 3 gezeigten Zustand ist der Arm 56 gerade ausgeschwenkt, sodass die Greifeinrichtung 52 gerade eine Blasformeinrichtung greifen kann.

Daneben ist auch eine Magazineinrichtung 70 dargestellt, welche eine Vielzahl von Aufnahmestellen 72 zum Aufnehmen der Blasformeinrichtungen aufweist. Diese Blasformeinrichtungen können dabei jeweils in die Aufnahmestellen bzw. Löcher 72 eingefahren werden.

Fig. 4 zeigt eine weitere Darstellung der erfindungsgemäßen Vorrichtung. Man erkennt, dass hier eine Wandung 32 vorgesehen ist, welche den Benutzer B von der Wechseleinrichtung 40 abtrennt, sodass dieser nicht verletzt werden kann. Daneben können auch weitere bewegbare Wandungsteile 34 vorgesehen sein, damit einerseits die Maschine leichter für Wartungszwecke zugänglich ist, oder andererseits auch weitere Wechseleinrichtungen vorgesehen sein können, wie auch in Fig. 1 dargestellt.

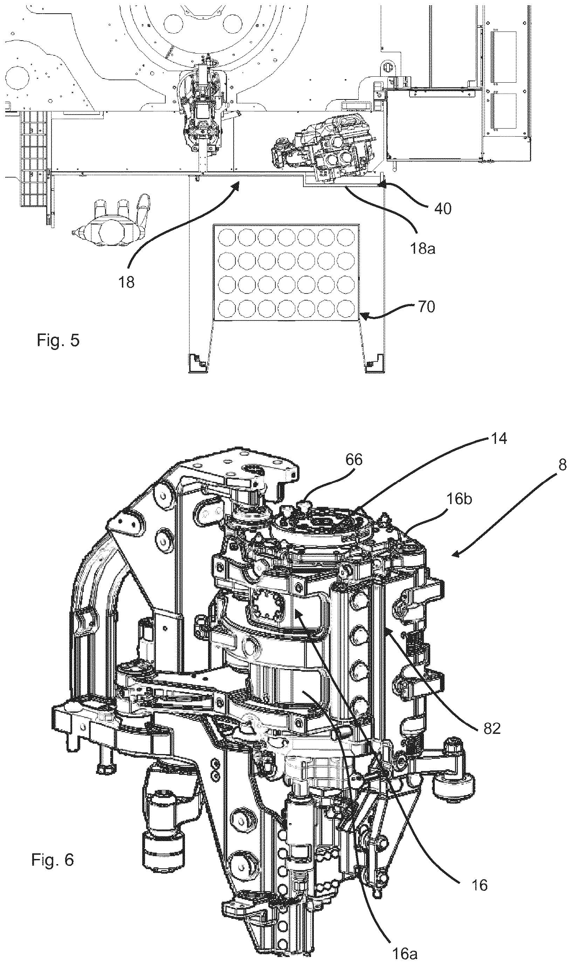

Die in Fig. 5 gezeigte Darstellung ähnelt der in Fig. 3 gezeigten Darstellung, wobei jedoch hier die Wechseleinrichtung 40 in einer anderen Betriebsposition ist. Hier kann es sich beispielweise um einen Arbeitsbetrieb handeln, bei dem die Vorrichtung Kunststoffvorformlinge zu Kunststoffbehältnissen umformt. Man erkennt, dass in dem Gehäuse 18 eine Ausnehmung 18a angeordnet sein kann, welche auch zum vollständigen Aufnehmen der Wechseleinrichtung 40 dient. Bei dem in Fig. 5 gezeigten Zustand können die einzelnen Arme der Wechseleinrichtung 40 so eingeklappt sein, dass die Wechseleinrichtung 40 einen nur geringen Platz einnimmt.

Fig. 6 zeigt eine Darstellung einer Umformungsstation 8. Man erkennt hier den Blasformträger 16, der zwei Blasformträgerteile 16a, 16b aufweisen kann, die auseinandergeschwenkt werden können, um die Blasformeinrichtung 14 zu öffnen und zu schließen. Auch für den Wechselbetrieb können die beiden Blasformträgerteile 16a, 16b auseinandergeschwenkt werden, um die Blasformeinrichtung 14 entnehmen zu können.

Das Bezugszeichen 82 kennzeichnet in seiner Gesamtheit eine Verriegelungseinrichtung, welche im Arbeitsbetrieb die beiden Blasformträgerteile 16a und 16b miteinander verriegelt, sodass auch bei größeren Drücken diese nicht auseinanderschwenken. Das Bezugszeichen 66 bezieht sich auf einen Vorsprung, der jeweils an den beiden Seitenteilen der Blasformeinrichtung 14 angeordnet ist. Dieser Vorsprung ist dabei so stabil ausgeführt, dass die gesamte Blasformeinrichtung 14 an diesem Vorsprung getragen werden kann. Dieser Vorsprung 66 kann dabei von der Greifeinrichtung bzw. einem Bestandteil der Greifeinrichtung hintergriffen werden, sodass die Greifeinrichtung 52 die Blasformeinrichtung über diesen Vorsprung tragen kann. Über ein Halten der jeweiligen Seitenteile der Blasformeinrichtung an den Vorsprüngen 66 kann auch die Blasformeinrichtung in ihrer Gesamtheit zusammengehalten werden.

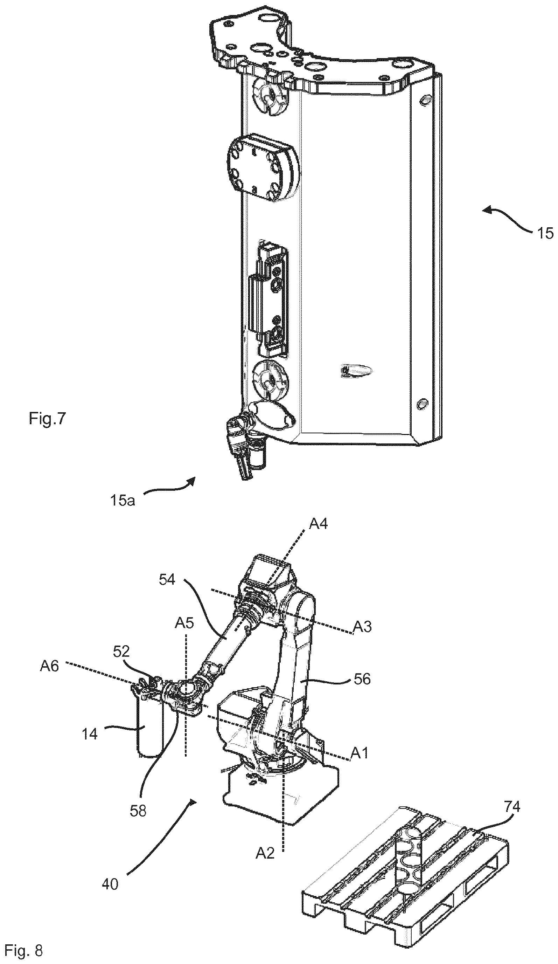

Fig. 7 kennzeichnet eine Blasformträgerschale. Diese Blasformträgerschale 15 kann an den Blasformträger 16 angeordnet sein und wiederum selbst die Blasformeinrichtung bzw. Teile der Blasformeinrichtung aufnehmen. Dabei können Zuführ- und Abführelemente 15a vorgesehen sein, um der Blasformschale 15 Medien, wie beispielsweise Temperiermedien, zuzuführen.

Fig. 8 zeigt eine weitere Darstellung der Wechseleinrichtung 40. Dabei ist wiederum der erste Arm 56 dargestellt, der bezüglich einer ersten Achse A1 schwenkbar ist. Daneben ist jedoch dieser Arm 56 auch bezüglich einer zweiten Achse A2 drehbar. An diesen ersten Arm 56 ist ein zweiter Arm 54 angeordnet und dabei ist der Arm 54 bezüglich einer Achse A3 gegenüber dem ersten Arm 56 schwenkbar. Hier sind die beiden Achsen A1 und A3 parallel zueinander. Diese Achsen können jedoch auch schräg bzw. windschief zueinander angeordnet sein. Daneben ist der zweite Arm 54 auch bezüglich einer vierten Achse A4 drehbar.

Zur Erreichung dieser jeweiligen Schwenk- und Drehbewegung bezüglich der einzelnen Achsen und auch bezüglich der weiteren noch zu beschreibenden Achsen sind jeweils Antriebseinrichtungen, wie insbesondere, aber nicht ausschließlich, elektromotorische Antriebe, vorgesehen. Daneben wäre jedoch auch die Verwendung von pneumatischen und/oder hydraulischen Antrieben denkbar. An dem zweiten Arm 54 ist eine Greifeinrichtung 52 vorgesehen, welche zum Greifen der Blasformeinrichtung dient. Dieses Greifelement ist dabei bezüglich einer Achse A5 gegenüber dem Arm 54 schwenkbar. Diese Achse A5 kann hier senkrecht zu der Achse A3 und/oder auch senkrecht zu der Achse A4 stehen. Daneben ist die Greifeinrichtung über einen Träger 58 an den Arm 54 angeordnet. Die Greifeinrichtung selbst kann wiederum gegenüber diesem Träger 58 bezüglich einer Achse A6 drehbar sein.

Mittels dieser Vielzahl von Bewegungen können die Blasformeinrichtungen 14 von der einzelnen Umformungsstation abgenommen und auf einen Träger 74, der hier als Europalette dargestellt ist, gestellt werden. Es wäre jedoch auch möglich, die Blasformeinrichtungen 14 direkt in vorgesehene Öffnungen eines Magazins einzubringen.

Ein Abstand zwischen der Magazineinrichtung oder der Palette 74 und der Wechseleinrichtung 40 kann dabei zwischen 1 Meter und 2 Metern liegen. Auch ein entsprechender Aktionsradius der Wechseleinrichtung kann in einem Bereich von 1,5 Metern liegen.

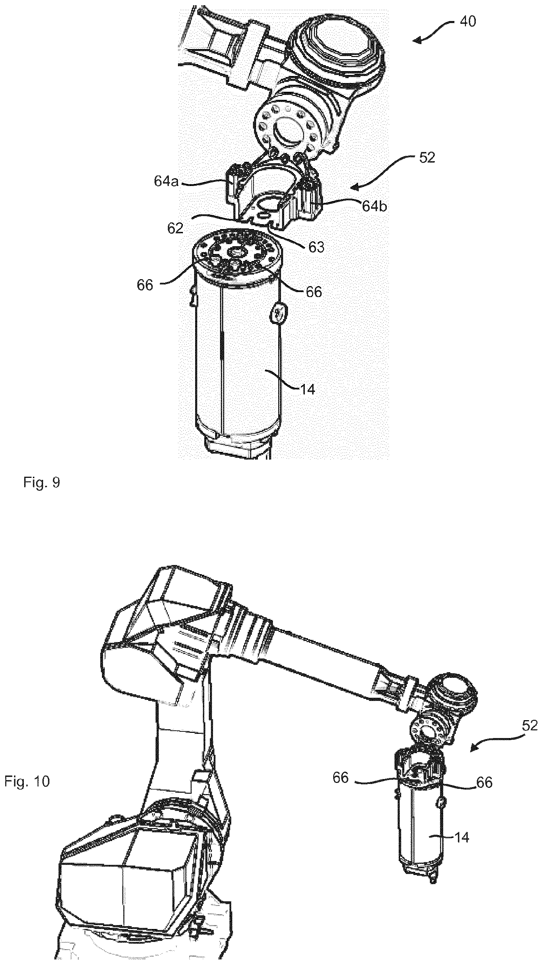

Fig. 9 zeigt eine Detaildarstellung der Wechseleinrichtung 40 bzw. deren Greifeinrichtung 52. Diese Greifeinrichtung kann dabei ein Führungselement 62 aufweisen, welches über eine entsprechende Oberfläche der Blasformeinrichtung geführt werden kann. Daneben können auch Vorsprünge 64a, 64b vorgesehen sein, welche zum Zentrieren der Wechseleinrichtung 40 bzw. genauer der Greifeinrichtung gegenüber der Umformungsstation dienen. Das Bezugszeichen 63 bezieht sich auf eine in dem Führungselement 62 angeordnete Ausnehmung, welche zum Wechseln der Blasformeinrichtung die Vorsprünge hintergreifen kann. Damit dient das Führungselement 62 auch zum Tragen der Blasformeinrichtung 14.

Fig. 10 zeigt eine Darstellung der Wechseleinrichtung mit einer daran angeordneten Blasformeinrichtung 14. Man erkennt, dass der Greifarm 52 hier in zwei Vorsprünge 66, die an der Blasformeinrichtung 14 angeordnet sind, eingreift und diese zusammendrückt, sodass auf diese Weise die Blasformeinrichtung zusammengehalten wird. Damit dienen die auch in Fig. 9 und Fig. 6 gezeigten Vorsprünge 66, die an der Blasformeinrichtung 14 angeordnet sind, zum Zusammenhalten derselben während deren Transports. Damit greift vorteilhaft die Greifeinrichtung 52 oberhalb der Blasformeinrichtung 14 in Elemente derselben ein, um diese zu halten. Diese Art des Eingreifens in die Blasformeinrichtung eignet sich in besonderer Weise, da die Blasformeinrichtung, wie auch in Fig. 6 gezeigt, über ihren Träger hinaussteht und auf diese Weise auch in einem geschlossenen Zustand des Blasformträgers 16 gegriffen werden kann. So ist es möglich, dass die Wechseleinrichtung bzw. der Roboter zunächst die Blasformeinrichtung 14 über deren Vorsprünge 66 greift und erst anschließend der Blasformträger geöffnet. Auf diese Weise kann sichergestellt werden, dass die Blasformeinrichtung zu jedem Zeitpunkt sicher gehalten wird.

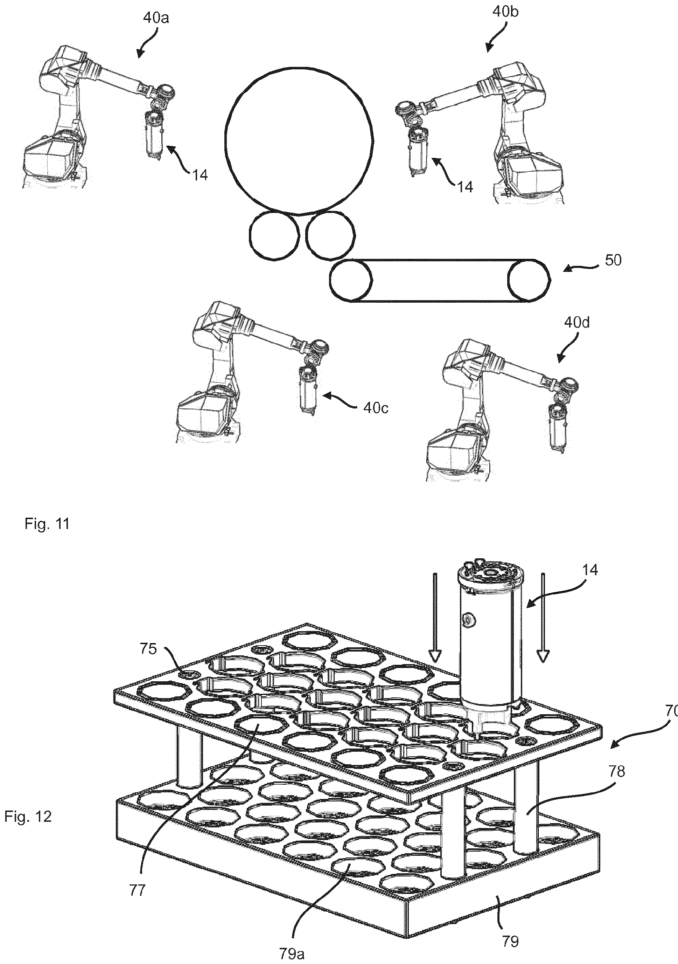

Fig. 11 zeigt eine weitere Darstellung der vorliegenden Erfindung. Hier sind mehrere Wechseleinrichtungen 40a - 40d vorgesehen, mit denen jeweils Elemente der Vorrichtung gewechselt werden können. Dabei wäre es beispielsweise möglich, dass zwei der Wechseleinrichtungen (40a, 40b) vorgesehen sind, um Blasformeinrichtungen 14 zu wechseln, dass aber auch weitere Wechseleinrichtungen vorgesehen sind, die andere Elemente auswechsein, wie beispielsweise Heizdorne, die sich in einem Ofen 50 zum Erwärmen der Kunststoffvorformlinge befinden (die Wechseleinrichtung 40d). Daneben können mit der gezeigten Wechseleinrichtung 40c beispielsweise auch Halteelemente, wie Transferzangen, gewechselt werden, welche die Kunststoffvorformlinge nach ihrer Erwärmung zu der Umformungseinrichtung 1 transportieren.

Fig. 12 zeigt eine Aufnahmeeinrichtung wie ein Magazin zum Aufnehmen der Blasformeinrichtungen 14. Dieses kann dabei eine Trägerplatte 75 enthalten, welche eine Vielzahl von Öffnungen 77 aufweist. Mittels Trägern 78 kann diese Platte 75 an einen Bodenträger 79 angeordnet sein, wobei dieser Bodenträger 79 wiederum Öffnungen 79a bzw. Löcher zum Aufnehmen der Blasformeinrichtungen aufweist. Vorteilhaft weist dieses Magazin die gleichen Abmessungen auf, wie eine sogenannte Europalette und damit vorzugsweise Abmessungen in einem Bereich von 1200 x 800 mm. Die einzelnen Öffnungen 79a sind dabei, wie in Fig. 12 gezeigt, in Reihen angeordnet und gegeneinander versetzt, sodass eine möglichst große Anzahl an Blasformeinrichtungen in die Palette eingebracht werden kann.

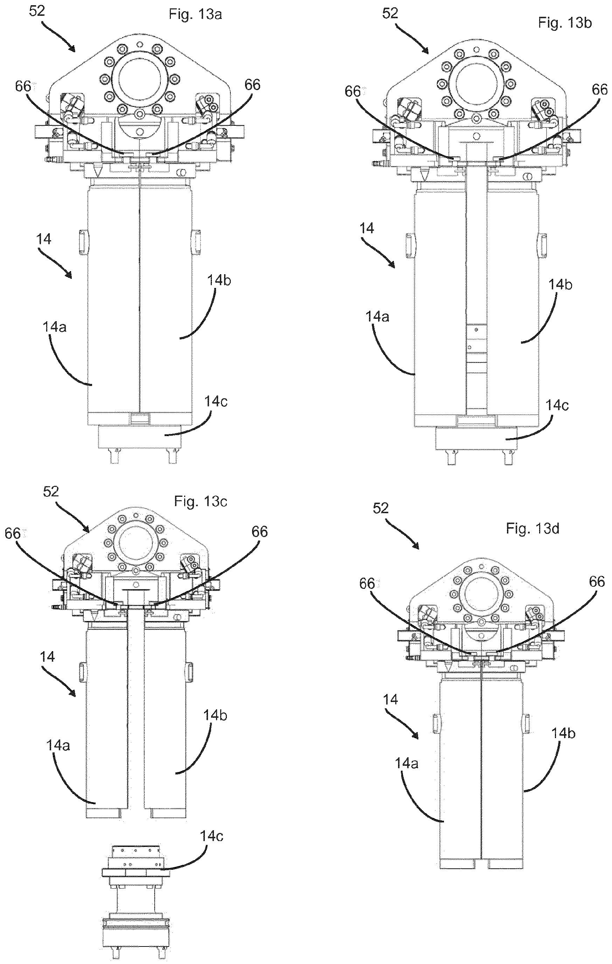

Die Figuren 13a - 13h veranschaulichen einen Wechselprozess für eine Blasformeinrichtung, bei der nicht die vollständige Blasformeinrichtung gewechselt werden soll sondern nur deren Seitenteile. Bei der in Figur 13a gezeigten Darstellung ist eine vollständige Blasformeinrichtung 14 an einer Greifeinrichtung 52 angeordnet. Hier entnimmt die Greifeinrichtung 52 die gesamte Blasformeinrichtung, d.h. sowohl die beiden Seitenteile 14a und 14b als auch das Bodenteil 14c, welches an die Seitenteile 14a und 14b mechanisch gekoppelt ist, von der Blasformmaschine. In einem weiteren Schritt wird die gesamte Blasformeinrichtung 14 auf einem (nicht gezeigten) Ablageplatz für das Bodenteil 14c abgestellt bzw. angeordnet. In einem weiteren Verfahrensschritt öffnet sich die Greifeinrichtung 52, wie in Figur 13d gezeigt. Zu diesem Zweck können zwei unten genauer erläuterte Halteelemente der Greifeinrichtung 52 auseinandergeschoben werden können, um so auch die beiden Seitenteile 14a und 14b auseinanderzufahren.

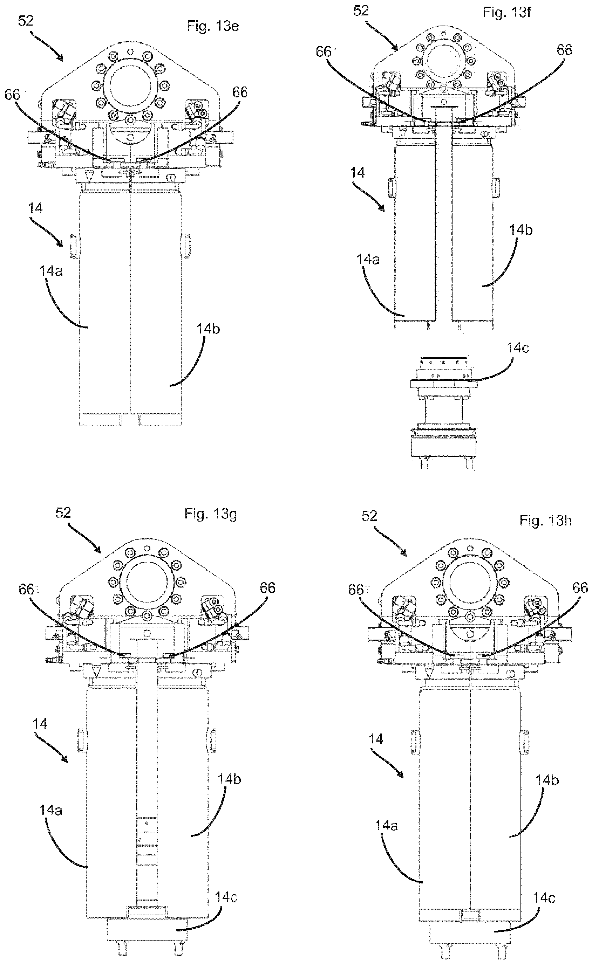

Bei der in Figur 13c gezeigten Situation bewegt sich die Greifeinrichtung 52 mit den daran nur noch angeordneten Seitenteilen 14a und 14b nach oben. Das Bodenteil 14c verbleibt an seinem Ablageplatz. Bei der in Figur 13d gezeigten Situation werden die beiden Seitenteile 14a und 14b in einem entsprechenden (nicht gezeigten) Lager abgelegt. Weiterhin werden - wie in Figur 13e gezeigt - neue Seitenteile 14a und 14b aus dem (nicht gezeigten) Lager entnommen. Bei der in Figur 13f gezeigten Situation werden diese beiden Seitenteile wieder auseinandergefahren und bei entsprechend geöffneter Greifeinrichtung über dem alten Bodenteil 14c platziert. Diese Situation ist auch in Figur 13g gezeigt. Bei dieser Situation wurden die beiden Seitenteile 14a und 14b nach unten bewegt und bei dem nunmehr folgenden Schließen der Greifeinrichtung 52 wird das alte Bodenteil von den beiden Blasformseitenteilen 14a und 14b aufgenommen.

Schließlich können die neuen Seitenteile 14a und 14b sowie das ursprüngliche Bodenteil 14c wieder an einem Formträger (nicht gezeigt) befestigt werden, wie in Figur 13h veranschaulicht.

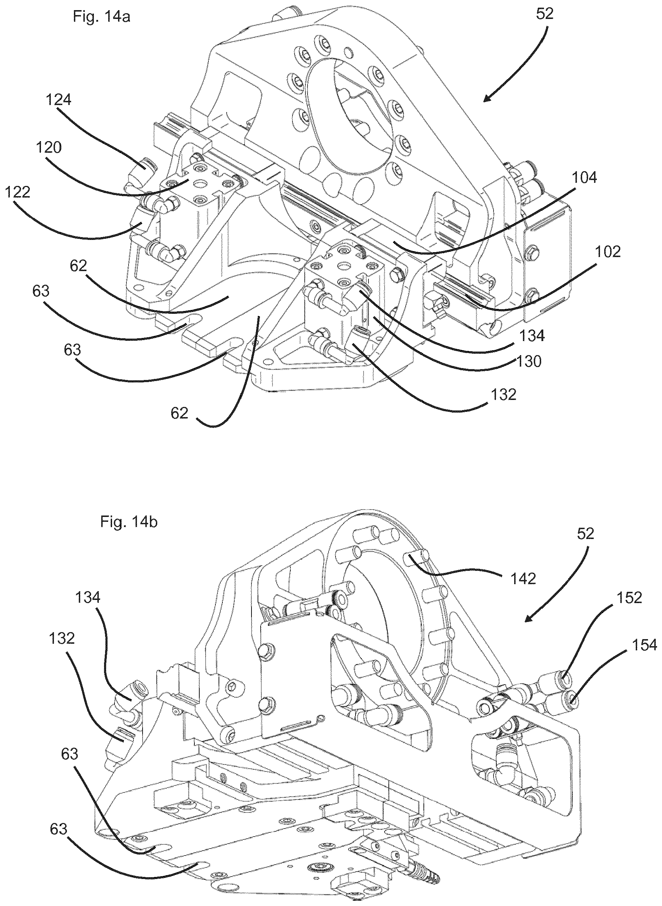

Die Figuren 14a und 14b zeigen eine Darstellung einer Greifeinrichtung, welche auch dazu geeignet und bestimmt ist, die beiden Seitenteile auseinanderzubewegen, um so das Bodenteil freizugeben. Dabei zeigt Figur 14a eine Ansicht von oben auf die Greifeinrichtung und Figur 14b eine Ansicht von unten. Man erkennt, dass diese Greifeinrichtung 52 wieder die beiden Führungselemente 62 aufweist, in denen die Ausnehmungen 63 (zur Aufnahme der an den Seitenteilen angeordneten Vorsprünge 66 angeordnet sind. Während jedoch bei der oben gezeigten Ausführungsform dieses Führungselement 62 einteilig ausgebildet war, sind nunmehr zwei derartige Führungselemente 62 vorgesehen, welche auseinandergefahren werden können. Zu diesem Zweck sind diese Führungselemente 62 (und damit auch die Ausnehmungen 63) jeweils über einen Schlitten 104 an einem Träger 102 angeordnet und können gegenüber diesem bewegt werden. Das Bezugszeichen 120 bezieht sich auf eine erste Antriebseinrichtung, um das in Figur 14a gezeigte linke Führungselement zu bewegen und das Bezugszeichen 130 bezieht sich auf eine Antriebseinrichtung, um das in Figur 14a rechts dargestellte Führungselement 62 zu bewegen. Die Bezugszeichen 122, 124, 132 und 134 kennzeichnen Kommunikationsverbindungen zum Anschließen eines Hydraulik- oder Pneumatikmittels. In Figur 14b sind Haltelemente 142 dargestellt, um die Greifeinrichtung 52 an einem Arm zu befestigen. Daneben sind weitere Anschlüsse 152, 154 für Hydraulik- oder Pneumatikmittel vorgesehen, um auch weitere Bewegungsfreiheitsgrade, wie etwa ein Schwenken der Führungselemente 62 in ihrer Gesamtheit zu bewirken oder auch Linearverschiebungen.

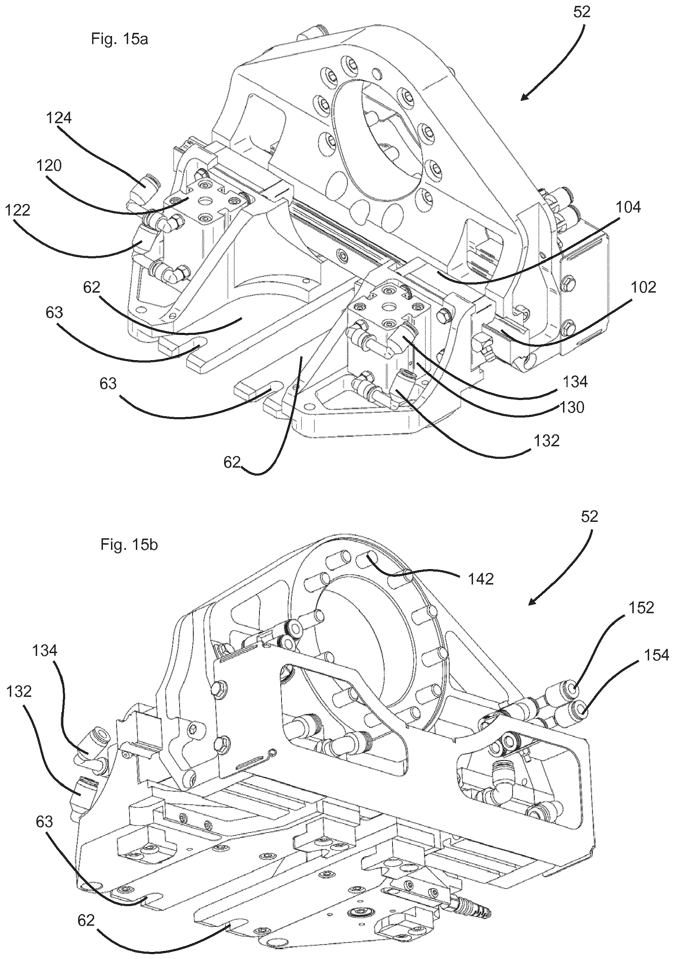

Bei der in den Figuren 15a und 15b gezeigten Ausgestaltungen sind die Führungselemente 62 auseinandergestellt bzw. voneinander entfernt. Entsprechend sind auch die Seitenteile, deren Vorsprünge in den Ausnehmungen 63 ruhen, auseinandergestellt, so dass - wie unter Bezugnahme auf die Figuren 13a - 13h erläutert - nunmehr das Bodenteil von den Seitenteilen entfernt werden kann.

Damit ermöglicht die Greifeinrichtung 52 bei dieser Ausgestaltung eine Relativbewegung zwischen den Führungselementen 63 bzw. Halteelementen 62, welche zum Halten bzw. Führen der Seitenteile 14a, 14b der Blasformeinrichtung 14 dienen. Dabei sind die beiden Führungselemente 62 jeweils entlang einer geradlinigen Richtung bewegbar, um so die Seitenteile der Blasformeinrichtung voneinander zu entfernen bzw. aufeinander zuzustellen.

Bevorzugt handelt es sich - wie oben erwähnt - bei den Antrieben zur Durchführung dieser Auseinander- und Zusammenbewegung der Seitenteile um pneumatische Antriebe. Als Magazine zum Ablegen der Blasformeinrichtungen können Standardmagazine verwendet werden.

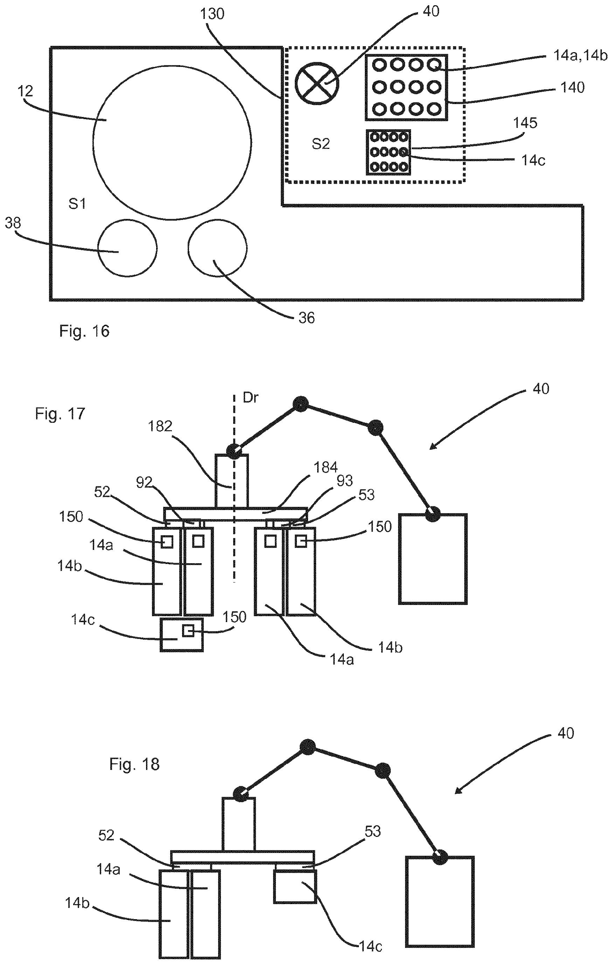

Fig. 16 zeigt eine Ausgestaltung einer erfindungsgemäßen Vorrichtung. Dabei ist wieder die Umformungseinrichtung 1 mit dem drehbaren Träger 12 dargestellt. Daneben ist auch eine Zuführeinrichtung 36 zum Zuführen der Kunststoffvorformlinge, etwa in Form eines Transportsterns sowie eine Abführeinrichtung 38 zum Abführen der gefertigten Kunststoffbehältnisse bzw. Kunststoffflaschen vorgesehen.

Das Bezugszeichen S1 bezieht sich auf den ersten Schutzbereich, innerhalb dessen die Umformungseinrichtung 1 angeordnet ist. Das Bezugszeichen S2 kennzeichnet den zweiten Schutzbereich, innerhalb dessen die Wechseleinrichtung 40 angeordnet ist. Der erste Schutzbereich S1 ist von dem zweiten Schutzbereich S2 durch ein Trennelement 160 getrennt. Dieses Trennelement 130 (etwa in Form eines Rollos) kann eine Verbindung zwischen den beiden Schutzbereichen S1 und S2 herstellen oder unterbrechen. Während eines Arbeitsbetriebs ist es denkbar, dass der erste Schutzbereich S1 geschlossen und der zweite Schutzbereich S2 geöffnet ist.

Das Bezugszeichen 140 bezieht sich auf eine erste Magazineinrichtung, in der hier eine Vielzahl von ersten Seitenteilen 14a und zweiten Seitenteilen 14b von Blasformeinrichtungen angeordnet ist. Diese Seitenteile weisen dabei bevorzugt Identifizierungselemente auf, um von der Wechseleinrichtung eindeutig identifiziert werden zu können.

Das Bezugszeichen 145 kennzeichnet eine zweite Magazineinrichtung, in der die Bodenteile 14c der Blasformeinrichtungen 14 angeordnet sind. Auch diese Bodenteile 14c sind bevorzugt eindeutig identifizierbar.

Fig. 17 zeigt eine Darstellung der Wechseleinrichtung 40. Bei dieser Ausgestaltung sind zwei Greifeinrichtungen 52, 53 (nicht im Detail gezeigt) vorgesehen, wobei an einer der Greifeinrichtung 52 die beiden Seitenteile 14a und 14b angeordnet sind sowie auch das Bodenteil 14c. Damit ist hier an der Greifeinrichtung die gesamte Blasformeinrichtung 14 angeordnet.

An der zweiten Greifeinrichtung 53 sind lediglich zwei Seitenteile 14a und 14b an der Greifeinrichtung angeordnet. Das Bezugszeichen 182 kennzeichnet eine Halteinrichtung, an dem die beiden Greifeinrichtung angeordnet sind. Weiterhin ist ein Träger 184 vorgesehen, der zum Tragen der beiden Halteeinrichtungen. Dieser Träger kann dabei bezüglich einer Drehachse Dr gedreht werden, um wahlweise die erste Greifeinrichtung 52 oder die zweite Greifeinrichtung 53 auf etwa die Umformungsstationen zuzustellen.

Die Bezugszeichen 92 und 93 beziehen sich jeweils auf Identifizierungseinrichtungen, welche zur Identifikation von Blasformteilen dienen. Hierbei kann es sich beispielsweise um RFID-Leseeinrichtungen handeln, die zum Auslesen von RFID - Tags geeignet sind. Diese Identifizierungseinrichtungen sind hier an den Greifeinrichtungen angeordnet, könnten jedoch auch an dem Träger 184 angeordnet sein. An den einzelnen Blasformteilen 14a, 14b, 14c sind wiederum Identifizierungselemente 150 angeordnet, welche eine eindeutige Identifizierung der einzelnen Blasformeinrichtungen ermöglichen. Hierbei kann es sich beispielsweise um RFID Tags oder dergleichen handeln. Die Vorrichtung weist bevorzugt weiterhin eine (nicht gezeigte) Speichereinrichtung auf, in der eingelesene Daten etwa Daten, welche die Blasformeinrichtungen charakterisieren, abgespeichert werden können.

Dabei wäre es möglich, dass solche Daten, welche die Blasformeinrichtungen charakterisieren, gemeinsam mit Positionsdaten der Greifeinrichtung abspeichern, so dass festgestellt werde kann, an welchem Ort (etwa innerhalb eines Magazins) sich eine bestimmte Blasformeinrichtung gerade befindet.

Bei der in Fig. 18 dargestellten Ausgestaltung sind ebenfalls zwei Greifeinrichtungen 52, 53 vorgesehen, wobei jedoch hier eine Greifeinrichtung 52 zum Greifen der beiden Seitenteile 14a und 14b der Blasformeinrichtung dient und die andere Greifeinrichtung 53 zum Greifen lediglich einer Blasform. Wie ausgeführt ist jedoch jede der beiden Greifeinrichtungen 52, 53 wahlweise nur zum Greifen der Seitenteile, nur zum Greifen eines Bodenteils oder zum Greifen einer gesamten Blasformeinrichtung aufweisend zwei Seitenteile und ein Bodenteil bestimmt.

### Bezugszeichenliste

- 1: Vorrichtung / Umformungseinrichtung
- 6: Basisträger
- 8: Umformungsstationen
- 10: Kunststoffvorformlinge
- 12: Stationsträger
- 14: Blasformeinrichtung
- 14a, 14b: Seitenteile der Blasformeinrichtung
- 14c: Bodenteil der Blasformeinrichtung
- 15: Blasformschale
- 15a: Zu- und Abführelement für Temperiermedium
- 16: Blasformträger
- 16a 16b: Blasformträgerteile
- 18: Gehäuse
- 18a: Ausnehmung
- 20: Kunststoffbehältnisse
- 22: Steuerungseinrichtung zum Steuern der Wechseleinrichtung
- 32: Wandung
- 34: Wandungsteile
- 36: Zuführeinrichtung
- 38: Abführeinrichtung
- 40: Wechseleinrichtung
- 40a-40d: Wechseleinrichtung
- 42: Steuerungseinrichtung zum Steuern der Umformungseinrichtung
- 46: Erfassungseinrichtung
- 50: Ofen
- 52: Greifeinrichtung
- 53: Greifeinrichtung
- 54: zweiter schwenkbarer Arm
- 56: erster schwenkbarer Arm
- 58: Träger
- 62: Führungselement
- 63: Ausnehmung
- 64a, 64b: Vorsprünge
- 66: Vorsprünge
- 70: Magazineinrichtung
- 72: Löcher
- 74: Träger / Palette
- 75: Trägerplatte
- 77: Öffnungen
- 78: Träger
- 79: Bodenträger
- 79a: Öffnungen / Löcher
- 82: Verriegelungseinrichtung
- 120,130: Antriebe
- 140,145: Magazin
- 122, 124: Kommunikationsverbindungen
- 132, 134: Kommunikationsverbindungen
- 142, 154: Anschlüsse
- 150: Identifizierungselement
- 160: Trennelement
- 172,174: Seitenteile
- 176: Bodenteil
- 182: Halteeinrichtung
- 184: Träger
- 192, 193: Identifizierungseinrichtung

- D: Drehachse
- Dr: Drehachse der Greifeinrichtungen
- B: Benutzer
- A1 - A6: Achsen
- W: Wechselposition
- R: radiale Richtung
- S1: erster Schutzbereich
- S2: zweiter Schutzbereich

## Patentansprüche

1. Verfahren zum Betreiben einer Umformungseinrichtung (1) zum Umformen von Kunststoffvorformlingen (10) zu Kunststoffbehältnissen (20), wobei in einem Arbeitsbetrieb der Vorrichtung (1) die Kunststoffvorformlinge (10) mittels einer Vielzahl von Umformungsstationen (8) entlang eines vorgegebenen Transportpfads transportiert werden und durch Beaufschlagung mit einem fließfähigen Medium zu den Kunststoffbehältnissen (20) expandiert werden, wobei zum Expandieren der Kunststoffvorformlinge (10) Blasformeinrichtungen (14) verwendet werden, in deren Inneren die Kunststoffvorformlinge (10) zu den Kunststoffbehältnissen (20) expandiert werden, wobei in einem Wechselbetrieb zumindest eine der Blasformeinrichtungen (14) der Vorrichtung (1) entnommen wird und/oder eine der Blasformeinrichtungen (14) an einem Blasformträger (16) der Vorrichtung (1) angeordnet wird, wobei zum Wechseln der Blasformeinrichtungen (14) eine Wechseleinrichtung (40) verwendet wird, welche eine Greifeinrichtung (52) zum Greifen der Blasformeinrichtung (14) aufweist, in einem Arbeitsbetrieb die Umformungseinrichtung (1) in einem ersten Schutzbereich (S1) betrieben wird, der für einen Maschinenbediener während der Produktion nicht betretbar ist und die Wechseleinrichtung (40) wenigstens teilweise in einem zweiten Schutzbereich (S2) angeordnet ist, der während des Arbeitsbetriebs wenigstens zeitweise für den Maschinenbediener betretbar ist, wobei zwischen dem ersten Schutzbereich (S1) und dem zweiten Schutzbereich (S2) eine Verbindung derart herstellbar ist,
dass der erste Schutzbereich (S1) und der zweite Schutzbereich (S2) über eine Schnittstelle miteinander verbunden sind, wobei diese Schnittstelle auch eine Unterbrechung der Verbindung ermöglicht und wobei die Wechseleinrichtung (40) örtlich außerhalb eines Schutzbereichs der Maschine bzw. der Umformungseinrichtung selbst platziert ist, und es sich bei dem Schutzbereich um Wandungen handelt, welche die Maschine umgeben und welche während des Arbeitsbetriebs ein Betreten des Maschinenbereichs verhindern, oder Lichtschrankensysteme vorgesehen sind, welche ein Betreten der Umformungseinrichtung (1) im laufenden Betrieb verhindern, wobei während eines Arbeitsbetriebs der Anlage in dem zweiten Schutzbereich eine Vorbereitung eines Wechselvorgangs durchgeführt wird, wobei unter einer Vorbereitung ein zur Verfügung stellen von einzuwechselnden Blasformeinheiten oder eine Erkennung von Blasformeinheiten verstanden wird,
**dadurch gekennzeichnet, dass**
vor oder während des Wechselvorgangs Blasformteile (14a, 14b, 14c) mittels einer Identifizierungseinrichtung identifiziert werden, wobei den identifizierten oder zu identifizierenden Blasformteilen (14a, 14b, 14c) für ihre Position innerhalb eines Magazins charakteristische Daten zugeordnet werden.

2. Verfahren nach Anspruch 1,
**dadurch gekennzeichnet, dass**
in dem Arbeitsbetrieb die Verbindung zwischen dem ersten Schutzbereich (S1) und dem zweiten Schutzbereich (S2) unterbrochen ist.

3. Verfahren nach wenigstens einem der vorangegangenen Ansprüche,
**dadurch gekennzeichnet, dass**
während des Wechselvorgangs wenigstens zeitweise die beiden Schutzbereiche (S1, S2) miteinander verbunden werden, derart dass der erste Schutzbereich (S1) wenigstens zeitweise von der Wechseleinrichtung (40) erreicht wird.

4. Verfahren nach wenigstens einem der vorangegangenen Ansprüche,
**dadurch gekennzeichnet, dass**
eine Aufnahmeeinrichtung (140, 145) enthaltend eine Vielzahl von Blasformeinrichtungen in einen Arbeitsbereich der Wechseleinrichtung (40) verbracht wird.

5. Verfahren nach Anspruch 1,
**dadurch gekennzeichnet, dass**
Blasformteile (14a, 14b, 14c) identifiziert werden, um diese Blasformteile (14a, 14b, 14c) vorbestimmten Umformungsstationen (8) zuzuordnen.

6. Verfahren nach Anspruch 1,
**dadurch gekennzeichnet, dass**
ein Wechselvorgang folgende Schritte aufweist:
- Öffnen des zweiten Schutzbereichs (S2);
- Einbringen einer Aufnahmeeinrichtung (140, 145) mit einer Vielzahl von Blasformteilen (14a, 14b, 14c);
- Identifikation wenigstens eines Teils der eingebrachten Blasformteile (14a, 14b, 14c).

7. Vorrichtung zum Umformen von Kunststoffvorformlingen (10) zu Kunststoffbehältnissen (20) mit einer Transporteinrichtung (2), welche die Kunststoffvorformlinge (10) entlang eines vorgegebenen Transportpfads transportiert, wobei die Transporteinrichtung (2) einen beweglichen und zumindest mittelbar an einem stationären Basisträger (6) angeordneten Stationsträger (12) aufweist, an dem eine Vielzahl von Umformungsstationen (8) angeordnet ist, wobei diese Umformungsstationen (8) jeweils Blasformeinrichtungen (14) aufweisen, welche jeweils Hohlräume ausbilden, innerhalb derer die Kunststoffvorformlinge (10) zu den Kunststoffbehältnissen umformbar sind und diese Blasformeinrichtungen jeweils an Blasformträgern (16) angeordnet sind, wobei die Vorrichtung (1) eine Wechseleinrichtung (40) aufweist, welche geeignet und dazu bestimmt ist, zumindest die Blasformeinrichtungen von deren Blasformträgern (16) zu entfernen und/oder Blasformeinrichtungen an den Blasformträgern (16) anzuordnen, wobei diese Wechseleinrichtung (40) eine Greifeinrichtung (52, 53) zum Greifen der Blasformeinrichtung (14) aufweist,
**dadurch gekennzeichnet, dass**
die Vorrichtung einen ersten Schutzbereich (S1) aufweist, innerhalb dessen die Umformungseinrichtung betrieben wird und wobei die Vorrichtung einen zweiten Schutzbereich (S2) aufweist, innerhalb dessen wenigstens abschnittsweise die Wechseleinrichtung (40) angeordnet ist, und der erste Schutzbereich und der zweite Schutzbereich dazu eingerichtet und dafür vorgesehen sind, unabhängig voneinander zugänglich machbar zu sein und/oder dazu eingerichtet und dafür vorgesehen sind, dass der zweite Schutzbereich mit dem ersten Schutzbereich in eine Verbindung bringbar ist, und zwar derart, dass der erste Schutzbereich (S1) und der zweite Schutzbereich (S2) über eine Schnittstelle miteinander verbindbar sind, wobei diese Schnittstelle auch eine Unterbrechung der Verbindung ermöglicht, so dass in einem Arbeitsbetrieb der Vorrichtung in dem zweiten Schutzbereich (S2) eine Vorbereitung eines Wechselvorgangs durchführbar ist, wobei unter einer Vorbereitung ein zur Verfügung stellen von einzuwechselnden Blasformeinheiten oder eine Erkennung von Blasformeinheiten verstanden wird und wobei die Wechseleinrichtung (40) örtlich außerhalb eines Schutzbereichs der Maschine bzw. der Umformungseinrichtung selbst platziert ist, und es sich bei dem Schutzbereich um Wandungen handelt, welche die Maschine umgeben und welche während des Arbeitsbetriebs ein Betreten des Maschinenbereichs verhindern, oder Lichtschrankensysteme vorgesehen sind, welche ein Betreten der Umformungseinrichtung (1) im laufenden Betrieb verhindern,
**dadurch gekennzeichnet, dass**
die Wechseleinrichtung (40) eine Identifizierungseinrichtung zum Identifizieren von Blasformeinrichtungen oder Blasformteilen (14a, 14b, 14c) aufweist, wobei den identifizierten oder zu identifizierenden Blasformteilen (14a, 14b, 14c) für ihre Position innerhalb eines Magazins charakteristische Daten zugeordnet werden.

8. Vorrichtung nach Anspruch 7,
**dadurch gekennzeichnet, dass**
in einem Arbeitsbetrieb der Vorrichtung die Wechseleinrichtung (40) vollständig in dem zweiten Schutzbereich angeordnet ist.

## Claims

1. Method for operating a forming device (1) for forming plastic preforms (10) into plastic containers (20), wherein in a working mode of the apparatus (1), the plastic preforms (10) are transported by means of a plurality of forming stations (8) along a predefined transport path, and by applying a flowable medium are expanded into plastic containers (20), wherein to expand the plastic preforms (10), blow-moulding devices (14) are used, inside which the plastic preforms (10) are expanded into plastic containers (20), wherein in a change mode, at least one of the blow-moulding devices (14) is removed from the apparatus (1) and/or one of the blow-moulding devices (14) is arranged on a blow-mould carrier (16) of the apparatus (1), wherein to change the blow-moulding devices (14), a change device (40) is used which has a gripper device (52) for gripping the blow-moulding device (14), in a working mode, the forming device (1) is operated in a first protected area (S1) which is not accessible to a machine operator during production, and the change device (40) is arranged at least partially in a second protected area (S2) which is accessible for the machine operator for at least part of the time in working mode, wherein a connection can be created between the first protected area (S1) and the second protected area (S2) in such a way
that the first protected area (S1) and the second protected area (S2) are connected together via an interface, wherein this interface also allows interruption of the connection and wherein the change device (40) is itself placed locally outside a protected area of the machine or the forming device and the protected area is walls which surround the machine and which prevent access to the machine area during the working mode or light barrier systems are provided, which prevent access to the forming device (1) during operation,
wherein during a working mode of the plant, a change process is prepared in the second protected area, wherein preparation means the provision of blow-moulding units to be inserted or a detection of blow-moulding devices,
**characterised in that**
before or during the change process, blow-moulding parts (14a, 14b, 14c) are identified by means of an identification device, wherein data characteristic of their position within a magazine are assigned to the blow-moulding parts (14a, 14b, 14c) identified or to be identified.

2. Method according to claim 1,
**characterised in that**
in working mode, the connection between the first protected area (S1) and the second protected area (S2) is interrupted.

3. Method according to at least one of the preceding claims,
**characterised in that**
during the change process, the two protected areas (S1, S2) are connected together for at least part of the time such that the first protected area (S1) can be reached by the change device (40) for at least part of the time.

4. Method according to at least one of the preceding claims,
**characterised in that**
a receiver device (140, 145) containing a plurality of blow-moulding devices is moved into a working area of the change device (40).

5. Method according to claim 1,
**characterised in that**
blow-moulding parts (14a, 14b, 14c) are identified in order to assign these blow-moulding parts (14a, 14b, 14c) to predefined forming stations (8).

6. Method according to claim 1,
**characterised in that**
a change process comprises the following steps:
- opening of the second protected area (S2);
- introduction of a receiver device (140, 145) with a plurality of blow-moulding parts (14a, 14b, 14c);
- identification of at least some of the blow-moulding parts (14a, 14b, 14c) introduced.

7. Apparatus for forming plastic preforms (10) into plastic containers (20), with a transport device (2) which transports the plastic preforms (10) along a predefined transport path, wherein the transport device (2) has a movable station carrier (12) arranged at least indirectly on a stationary base carrier (6) and on which a plurality of forming stations (8) are arranged, wherein these forming stations (8) each comprise blow-moulding devices (14) which each form cavities within which the plastic preforms (10) can be formed into plastic containers, and these blow-moulding devices are each arranged on blow-mould carriers (16), wherein the apparatus (1) has a change device (40) which is suitable and intended at least to remove the blow-moulding devices from their blow-mould carriers (16) and/or arrange blow-moulding devices on the blow-mould carriers (16), wherein this change device (40) comprises a gripper device (52, 53) for gripping the blow-moulding device (14), **characterised in that**
the apparatus has a first protected area (S1) within which the forming device is operated, and wherein the apparatus has a second protected area (S2) within which the change device (40) is at least partially arranged, and the first protected area and the second protected area can be made accessible independently of each other and/or the second protected area can be brought into connection with the first protected area in such a way that the first protected area (S1) and the second protected area (S2) are connectable together via an interface, wherein this interface also allows interruption of the connection so that during a working mode of the apparatus, a change process is preparable in the second protected area (S2), wherein preparation means the provision of blow-moulding units to be inserted or a detection of blow-moulding devices and wherein the change device (40) is itself placed locally outside the a protected area of the machine or the forming device and the protected area is walls which surround the machine and which prevent access to the first protection area (S1) during the working mode or light barrier systems are provided which prevent access to the forming device (1) during operation,
**characterised in that**
the change device (40) comprises an identification device for identification of blow-moulding devices or blow-moulding parts (14a, 14b, 14c), wherein data characteristic of their position within a magazine are assigned to the blow-moulding parts (14a, 14b, 14c) identified or to be identified.

8. Apparatus according to claim 7,
**characterised in that**
in a working mode of the apparatus, the change device (40) is completely arranged in the second protected area.

## Revendications

1. Procédé pour faire fonctionner un système de façonnage (1) pour le façonnage de préformes en plastique (10) en récipients en plastique (20), dans lequel dans un mode travail du dispositif (1) les préformes en plastique (10) sont transportées au moyen d'une pluralité de stations de façonnage (8) le long d'un trajet de transport prédéfini et sont élargies en récipients en plastique (20) par sollicitation avec un milieu coulant, dans lequel pour l'élargissement des préformes en plastique (10) des systèmes de moulage par soufflage (14) sont utilisés, à l'intérieur desquels les préformes en plastique (10) sont élargies en récipients en plastique (20), dans lequel dans un mode remplacement au moins un des systèmes de moulage par soufflage (14) est prélevé du dispositif (1) et/ou un des systèmes de moulage par soufflage (14) est disposé sur un support de moule de soufflage (16) du dispositif (1), dans lequel pour le remplacement des systèmes de moulage par soufflage (14) un système de remplacement (40) est utilisé, lequel présente un système de préhension (52) pour la préhension du système de moulage par soufflage (14), dans un mode travail le système de façonnage (1) fonctionne dans une première zone de protection (S1), dans laquelle un utilisateur de machine ne peut entrer pendant la production et le système de remplacement (40) est disposé au moins en partie dans une deuxième zone de protection (S2), dans laquelle l'utilisateur de machine peut entrer au moins temporairement pendant le mode travail, dans lequel une liaison peut être établie entre la première zone de protection (S1) et la deuxième zone de protection (S2) de telle sorte
que la première zone de protection (S1) et la deuxième zone de protection (S2) sont reliées l'une à l'autre par l'intermédiaire d'une interface, dans lequel cette interface permet également une interruption de la liaison, et dans lequel le système de remplacement (40) est placé localement à l'extérieur d'une première zone de protection de la machine ou du système de façonnage, et il s'agit pour la première zone de protection (S1) de parois, lesquelles entourent la machine et lesquelles empêchent pendant le mode travail une entrée dans la zone de la machine, ou des systèmes de barrière lumineuse sont prévus, lesquels empêchent une entrée du système de façonnage (1) dans le mode en cours,
dans lequel pendant un mode travail de l'installation, une préparation d'un processus de remplacement est mise en oeuvre dans la deuxième zone de protection, dans lequel on entend par préparation une mise à disposition d'unités de moulage par soufflage à changer ou une détection d'unités de moulage par soufflage,
**caractérisé en ce que**
avant ou pendant le processus de remplacement des parties de moule de soufflage (14a, 14b, 14c) sont identifiées au moyen d'un système d'identification, dans lequel des données sont associées aux parties de moule de soufflage (14a, 14b, 14c) identifiées ou à identifier, caractéristiques de la position de celles-ci à l'intérieur d'un magasin.

2. Procédé selon la revendication 1,
**caractérisé en ce que**
dans le mode travail la liaison entre la première zone de protection (S1) et la deuxième zone de protection (S2) est interrompue.

3. Procédé selon au moins l'une des revendications précédentes,
**caractérisé en ce que**
pendant le processus de remplacement les deux zones de protection (S1, S2) sont reliées l'une à l'autre au moins temporairement, de telle sorte que la première zone de protection (S1) est atteinte au moins temporairement par le système de remplacement (40).

4. Procédé selon au moins l'une des revendications précédentes,
**caractérisé en ce que**
un système de réception (140, 145) contenant une pluralité de systèmes de moulage par soufflage est amené dans une zone de travail du système de remplacement (40).

5. Procédé selon la revendication 1,
**caractérisé en ce que**
des parties de moule de soufflage (14a, 14b, 14c) sont identifiées, afin d'associer ces parties de moule de soufflage (14a, 14b, 14c) à des stations de façonnage (8) prédéfinies.

6. Procédé selon la revendication 1,
**caractérisé en ce que**
un processus de remplacement présente les étapes suivantes :
- l'ouverture de la deuxième zone de protection (S2) ;
- l'introduction d'un système de réception (140, 145) avec une pluralité de parties de moule de soufflage (14a, 14b, 14c)
- l'identification d'au moins une partie des parties de moule de soufflage (14a, 14b, 14c) introduites.

7. Dispositif pour le façonnage de préformes en plastique (10) en récipients en plastique (20) avec un système de transport (2), lequel transporte les préformes en plastique (10) le long d'un trajet de transport prédéfini, dans lequel le système de transport (2) présente un support de station (12) mobile et disposé au moins indirectement sur un support de base (6) fixe, sur lequel une pluralité de stations de façonnage (8) est disposée, dans lequel ces stations de façonnage (8) présentent respectivement des systèmes de moulage par soufflage (14), lesquels réalisent respectivement des cavités, à l'intérieur desquelles les préformes en plastique (10) peuvent être façonnées en récipients en plastique et ces systèmes de moulage par soufflage sont disposés respectivement sur des supports de moule de soufflage (16), dans lequel le dispositif (1) présente un système de remplacement (40), lequel est adapté et destiné à prélever au moins les systèmes de moulage par soufflage des supports de moule de soufflage (16) de ceux-ci et/ou à disposer des systèmes de moulage par soufflage sur les supports de moule de soufflage (16), dans lequel ce système de remplacement (40) présente un système de préhension (52, 53) pour la préhension du système de moulage par soufflage (14),
**caractérisé en ce que**
le dispositif présente une première zone de protection (S1), à l'intérieur de laquelle le système de façonnage fonctionne et dans lequel le dispositif présente une deuxième zone de protection (S2), à l'intérieur de laquelle le système de remplacement (40) est disposé au moins sur certaines parties, et la première zone de protection et la deuxième zone de protection sont conçues et prévues pour pouvoir être rendues accessibles indépendamment l'une de l'autre et/ou sont conçues et prévues pour que la deuxième zone de protection puisse être amenée avec la première zone de protection dans une liaison, et ce de telle sorte que la première zone de protection (S1) et la deuxième zone de protection (S2) puissent être reliées l'une à l'autre par l'intermédiaire d'une interface, dans lequel cette interface permet également une interruption de la liaison, de sorte que dans un mode travail du dispositif une préparation d'un processus de remplacement peut être mise en oeuvre dans la deuxième zone de protection (S2), dans lequel on entend par préparation une mise à disposition d'unités de moulage par soufflage à changer ou une détection d'unités de moulage par soufflage et dans lequel le système de remplacement (40) est placé localement à l'extérieur d'une zone de protection de la machine ou du système de façonnage, et il s'agit pour la première zone de protection (S1) de parois, lesquelles entourent la machine et lesquelles empêchent pendant le mode travail une entrée dans la zone de la machine, ou des systèmes de barrière lumineuse sont prévus, lesquels empêchent une entrée du système de façonnage (1) dans le mode en cours,
**caractérisé en ce que**
le système de remplacement (40) présente un système d'identification pour l'identification de systèmes de moulage par soufflage ou parties de moule de soufflage (14a, 14b, 14c), dans lequel des données sont associées aux parties de moule de soufflage (14a, 14b, 14c) identifiées ou à identifier, caractéristiques de la position de celles-ci à l'intérieur d'un magasin.

8. Dispositif selon la revendication 7,
**caractérisé en ce que**
dans un mode travail du dispositif le système de remplacement (40) est entièrement disposé dans la deuxième zone de protection.
